(19) Europäisches Patentamt
European Patent Office
Office européen des brevets

(11) **EP 4 773 686 A1**

(12) **EUROPEAN PATENT APPLICATION**
published in accordance with Art. 153(4) EPC

(43) Date of publication:
**08.07.2026 Bulletin 2026/28**

(21) Application number: **23960468.9**

(22) Date of filing: **05.12.2023**

(51) International Patent Classification (IPC):
**H04W 52/14** (2009.01)

(52) Cooperative Patent Classification (CPC):
**H04W 52/14**

(86) International application number:
**PCT/CN2023/136546**

(87) International publication number:
**WO 2025/118154 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **CAO, Jianfei
Dongguan, Guangdong 523860 (CN)**
• **LIU, Zhe
Dongguan, Guangdong 523860 (CN)**
• **CHEN, Wenhong
Dongguan, Guangdong 523860 (CN)**

(74) Representative: **Grassi, Stefano
Bugnion S.p.A.
Viale Lancetti, 17
20158 Milano (IT)**

(54) **POWER CONTROL METHODS AND APPARATUSES, AND COMMUNICATION DEVICE**

(57) Provided are power control methods and apparatuses, a communication device, a chip, and a computer-readable storage medium. The method includes: a terminal device determining a second pathloss based on a first pathloss and a first pathloss offset, where the first pathloss is a pathloss between the terminal device and a first network device, and the second pathloss is a pathloss between the terminal device and a second network device; and the terminal device determining transmit power of the terminal device to the second network device based on the second pathloss.

A terminal device determines a second pathloss based on a first pathloss and a first pathloss offset, the first pathloss being a pathloss between the terminal device and a first network device, and the second pathloss being a pathloss between the terminal device and a second network device — 301

The terminal device determines, based on the second pathloss, transmit power of an uplink signal and/or an uplink channel sent by the terminal device to a second network device — 302

**FIG. 3**

EP 4 773 686 A1

**Description**

TECHNICAL FIELD

Embodiments of the present disclosure relate to the technical field of mobile communication, and in particular, to power control methods and apparatuses, and a communication device

BACKGROUND

Power control is required for uplink transmission of a terminal device, and one of the key factors for power control is the path loss between the terminal device and a network device. For certain types of network devices that only have the capability of receiving uplink transmission but lack the capability of transmitting downlink transmission, the terminal device cannot estimate the path loss between itself and the network device by measuring downlink reference signals of the network device, thereby making it impossible to perform uplink power control for such types of network devices.

SUMMARY

Embodiments of the present disclosure provide power control methods and apparatuses, a communication device, a chip, a computer-readable storage medium, a computer program product, and a computer program.

Embodiments of the present disclosure provide a power control method, and the power control method includes that:

a terminal device determines a second path loss based on a first path loss and a first path loss offset, the first path loss being a path loss between the terminal device and a first network device, and the second path loss being a path loss between the terminal device and a second network device; and
the terminal device determines, based on the second path loss, transmit power of an uplink signal and/or an uplink channel sent by the terminal device to the second network device.

Embodiments of the present disclosure provide a power control method, and the power control method includes that:
a first network device sends signaling to a terminal device, the signaling being configured to determine a first path loss offset, the first path loss offset and a first path loss being used for the terminal device to determine a second path loss, the first path loss being a path loss between the terminal device and the first network device, the second path loss being a path loss between the terminal device and a second network device, and the second path loss being used for the terminal device to determine transmit power of an uplink signal and/or an uplink channel sent to the second network device.

Embodiments of the present disclosure provide a power control apparatus implemented by a terminal device, and the power control apparatus includes:
a determining unit, configured to: determine a second path loss based on a first path loss and a first path loss offset, the first path loss being a path loss between the terminal device and a first network device, and the second path loss being a path loss between the terminal device and a second network device; and determine, based on the second path loss, transmit power of an uplink signal and/or an uplink channel sent by the terminal device to the second network device.

Embodiments of the present disclosure provide a power control apparatus implemented by a first network device, and the power control apparatus includes:
a sending unit, configured to: send signaling to a terminal device, the signaling being configured to determine a first path loss offset, the first path loss offset and a first path loss being used for the terminal device to determine a second path loss, the first path loss being a path loss between the terminal device and the first network device, the second path loss being a path loss between the terminal device and a second network device, and the second path loss being used for the terminal device to determine transmit power of an uplink signal and/or an uplink channel sent to the second network device.

A communication device provided in embodiments of the present disclosure includes a processor and a memory. The memory is configured to store a computer program, and the processor is configured to invoke and run the computer program stored in the memory to perform the above power control methods.

A chip provided in embodiments of the present disclosure is configured to implement the above power control methods. The chip includes: a processor configured to invoke and run a computer program from a memory to cause a device mounted with the chip to perform the above power control methods.

A computer-readable storage medium provided in embodiments of the present disclosure is configured to store a computer program that causes a computer to perform the above power control methods.

A computer program product provided in embodiments of the present disclosure includes computer program instructions that cause a computer to perform the above power control methods.

A computer program provided in embodiments of the present disclosure, when run on a computer, may cause the computer to perform the above power control method.

With the above technical solution, the terminal device may determine the path loss between the terminal device and the second network device (i.e., the second path loss) based on the path loss between the terminal device and the first network device (i.e., the first path loss) and the first path loss offset. In this way, a manner of determining the path loss between the terminal device and the second network device is defined, so that the terminal device may determine transmit power of an uplink signal and/or an uplink channel sent by the terminal device to the second network device based on the path loss between the terminal device and the second network device, thereby implementing power control by the terminal device for uplink transmission to the second network device.

BRIEF DESCRIPTION OF THE DRAWINGS

The accompanying drawings described herein are provided to facilitate a further understanding of the present disclosure and constitute a part thereof. The exemplary embodiments of the present disclosure and the descriptions thereof are provided to explain the present disclosure and do not constitute an improper limitation to the present disclosure. In the accompanying drawings:

FIG. 1 is a schematic diagram of an application scenario provided by an embodiment of the present disclosure;
FIG. 2 is a schematic structural diagram of a media access control control element (MAC CE) for activating a TCI state;
FIG. 3 is a first schematic flowchart of a power control method provided by an embodiment of the present disclosure;
FIG. 4 is a schematic diagram of a scenario in which an uplink TRP and a regular TRP are used in combination provided by an embodiment of the present disclosure;
FIG. 5 is a first schematic diagram of transmission of SRS by a terminal device provided by an embodiment of the present disclosure;
FIG. 6 is a second schematic diagram of transmission of SRS by a terminal device provided by an embodiment of the present disclosure;
FIG. 7 is a first schematic structural diagram of a MAC CE provided by an embodiment of the present disclosure;
FIG. 8 is a second schematic structural diagram of a MAC CE provided by an embodiment of the present disclosure;
FIG. 9-1 is a third schematic structural diagram of a MAC CE provided by an embodiment of the present disclosure;
FIG. 9-2 is a fourth schematic structural diagram of a MAC CE provided by an embodiment of the present disclosure;
FIG. 10-1 is a fifth schematic structural diagram of a MAC CE provided by an embodiment of the present disclosure;
FIG. 10-2 is a sixth schematic structural diagram of a MAC CE provided by an embodiment of the present disclosure;
FIG. 11 is a second schematic flowchart of a power control method provided by an embodiment of the present disclosure;
FIG. 12 is a third schematic flowchart of a power control method provided by an embodiment of the present disclosure;
FIG. 13 is a fourth schematic flowchart of a power control method provided by an embodiment of the present disclosure;
FIG. 14 is a fifth schematic flowchart of a power control method provided by an embodiment of the present disclosure;
FIG. 15 is a first schematic structural composition diagram of a power control apparatus provided by an embodiment of the present disclosure;
FIG. 16 is a second schematic structural composition diagram of a power control apparatus provided by an embodiment of the present disclosure;
FIG. 17 is a schematic structural diagram of a communication device provided by an embodiment of the present disclosure;
FIG. 18 is a schematic structural diagram of a chip according to an embodiment of the present disclosure.

DETAILED DESCRIPTION

The technical solutions in the embodiments of the present disclosure will be described below with reference to the accompanying drawings in the embodiments of the present disclosure. The described embodiments are some but not all of the embodiments. Based on the embodiments in the present disclosure, all other embodiments obtained by a person of ordinary skill in the art without creative efforts shall fall within the protection scope of the present disclosure.

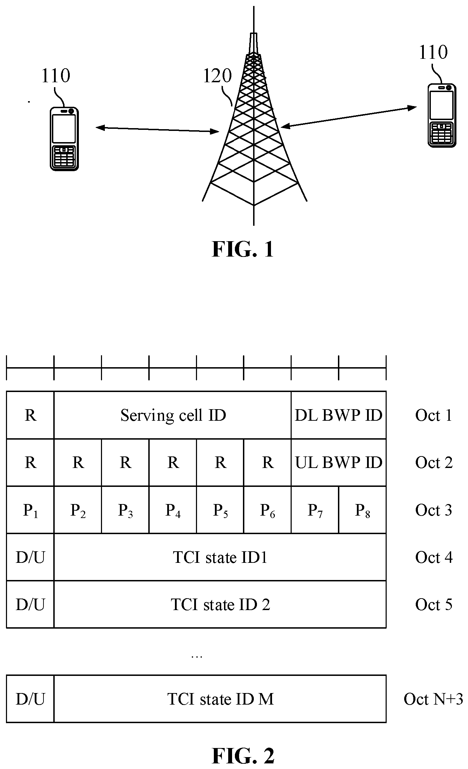

FIG. 1 is a schematic diagram of an application scenario according to an embodiment of the present disclosure.

As shown in FIG. 1, a communication system may include a terminal device 110 and a network device 120. The network device 120 may communicate with the terminal device 110 over an air interface. Multi-service transmission is supported between the terminal device 110 and the network device 120.

It should be understood that the embodiments of the present disclosure are only exemplarily described with reference to a communication system, but the embodiments of the present disclosure are not limited thereto. That is, the technical solutions of the embodiments of the present disclosure may be applied to various communication systems, for example, a Long Term Evolution (LTE) system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), a Beyond 5G (B5G) communication system, a 6G communication system, or a future communication system.

In the communication system shown in FIG. 1, the network device 120 may be an access network device that communicates with the terminal device 110. The access network device may provide communication coverage for a specific geographic area, and may communicate with the terminal device 110 (e.g., UE) located within the coverage area.

The network device 120 may be an evolved Node B (eNB or eNodeB) in a Long Term Evolution (LTE) system, or a Next Generation Radio Access Network (NG RAN) device, or a base station (gNB) in an NR system, or a radio controller in a Cloud Radio Access Network (CRAN), or the network device 120 may be a relay station, an access point, a Transmission/Reception Point (TRP), a vehicle-mounted device, a wearable device, a hub, a switch, a bridge, a router, or a network device in a future evolved Public Land Mobile Network (PLMN).

The terminal device 110 may be any terminal device, including but not limited to a terminal device that is wired or wirelessly connected to the network device 120 or another terminal device.

For example, the terminal device 110 may refer to an access terminal, a User Equipment (UE), a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device or another processing device connected to a wireless modem, a vehicle-mounted device, a wearable device, a terminal device in a 5G network, or a terminal device in a future evolved network.

Although one network device and two terminal devices are shown in some embodiments in FIG. 1, the wireless communication system may include multiple network devices, and other numbers of terminal devices may be included within a coverage area of each network device, which is not limited in the embodiments of the present disclosure.

It should be noted that FIG. 1 merely illustrates a system to which the present disclosure is applied by way of example, and the method provided in the embodiments of the present disclosure may also be applied to other systems. In addition, the terms "system" and "network" are often used interchangeably herein. The term "and/or" herein is merely an association relationship describing associated objects, indicating that three relationships may exist, for example, A and/or B may indicate: A exists alone, A and B exist simultaneously, and B exists alone. In addition, the character "/" herein generally indicates that the associated objects are in an "or" relationship. It should also be understood that the "indicate" mentioned in the embodiments of the present disclosure may be a direct indication, an indirect indication, or an indication of an association relationship. For example, A indicates B may represent that A directly indicates B, for example, B may be obtained from A; or that A indirectly indicates B, for example, A indicates C, and B may be obtained from C; or that there is an association relationship between A and B. It should also be understood that the "correspond" mentioned in the embodiments of the present disclosure may indicate a direct correspondence or an indirect correspondence between two objects, an association relationship between two objects, or an indicating-indicated relationship, a configuring-configured relationship, or the like. It should also be understood that the "predefined" or "predefined rule" mentioned in the embodiments of the present disclosure may be implemented by pre-storing corresponding codes or tables, or by other manners for indicating relevant information in a device (e.g., including a terminal device and a network device), and the specific implementation manner is not limited in the present disclosure. For example, predefined may refer to defined in a protocol. It should also be understood that in the embodiments of the present disclosure, the "protocol" may refer to a standard protocol in the communication field, which for example, may include an LTE protocol, an NR protocol, and related protocols applied to a future communication system, which is not limited in the present disclosure.

To facilitate understanding of the technical solutions of the embodiments of the present disclosure, related technologies of the embodiments of the present disclosure are described below. The following related technologies may be arbitrarily combined with the technical solutions of the embodiments of the present disclosure as optional solutions, all of which fall within the protection scope of the embodiments of the present disclosure.

1. Multi-Transmission/Reception Point (mTRP) transmission

mTRP transmission (also referred to as MTRP transmission) means that multiple TRPs may communicate with a terminal device simultaneously on a same Component Carrier (CC).

In the enhancement of mTRP transmission in R16, various transmission manners of mTRP are formulated. Specifically, implementation may be roughly performed according to two different scheduling manners.

Manner 1: which is an mTRP transmission manner based on single Downlink Control Information (DCI) (simply referred to as sDCI-mTRP).

Taking transmission between a terminal device and two TRPs as an example, a network (NW) uses one piece of DCI to schedule both transmission corresponding to TRP 1 and transmission corresponding to TRP2. It should be understood that the DCI may come from one of the two TRPs.

Manner 2: which is an mTRP transmission manner based on multiple DCIs (simply referred to as mDCI-mTRP).

Taking transmission between a terminal device and two TRPs as an example, a NW uses two pieces of DCI to respectively schedule transmission corresponding to TRP1 and transmission corresponding to TRP2, for example, scheduling transmission corresponding to TRP1 by using DCI1 and scheduling transmission corresponding to TRP2 by using DCI2. It should be understood that in Manner 2, each TRP independently schedules transmission of the TRP by sending DCI.

To enhance uplink coverage, a special type of network device is introduced into a communication system. This type of network device only has an uplink transmission receiving capability, that is, this type of network device does not support downlink transmission. This type of network device may be referred to as an uplink-only TRP (UL-only TRP) or an uplink TRP. It may be understood that for an FDD system, the UL-only TRP may only implement a receiving capability of an uplink spectrum in FDD without a transmitting capability of a downlink spectrum, thereby reducing manufacturing costs. In this case, the NW may deploy more UL-only TRPs to reduce a distance between a terminal device and a TRP, thereby enhancing an uplink coverage capability without increasing complexity of the terminal device.

It is to be noted that the UL-only TRP does not support downlink transmission, and naturally does not support transmission of a downlink reference signal; the UL-only TRP only supports reception of uplink transmission, for example, supporting reception of an uplink channel and/or an uplink signal.

2. Transmission Configuration Indication (TCI) state

When receiving a signal, a terminal device may improve a receiving algorithm by utilizing characteristics of a transmission environment corresponding to data transmission so as to improve receiving performance. For example, a statistical characteristic of a channel may be utilized to optimize design and parameters of a channel estimator. In an NR system, these characteristics corresponding to data transmission are represented by Quasico-Location (QCL) information (QCL-Info).

A TCI state may include: a TCI state identifier (ID), QCL information 1, and QCL information 2. The QCL information 2 is optional. In addition, a piece of QCL information may include: a QCL type configuration and a QCL reference signal configuration. The QCL type configuration may be one of QCL type A, QCL typeB, QCL typeC, or QCL typeD. The reference signal configuration may be a cell ID, a Bandwidth Part (BWP) ID, and an identifier of a reference signal, for example, a Channel State Information Reference Signal (CSI-RS) resource ID or a Synchronization Signal/PBCH Block (SSB) index.

Definitions of different QCL types are as follows: QCL typeA is used to configure {Doppler shift, Doppler spread, average delay, delay spread}, QCL typeB is used to configure {Doppler shift, Doppler spread}, QCL typeC is used to configure {Doppler shift, average delay}, and QCL typeD is used to configure {Spatial Rx parameter}.

A network device may indicate a corresponding TCI state for a downlink signal or a downlink channel.

If a network device configures, by using a TCI state, a QCL reference signal of a downlink signal or a downlink channel as an SSB 1 or CSI-RS 1 resource, and configures a QCL type as typeA, typeB, or typeC, the terminal device may assume that large-scale parameters of the foregoing downlink signal or target downlink channel are the same as or similar to those of the SSB 1 or CSI-RS 1 resource, where the large-scale parameters are determined by the QCL type configuration.

If the network device configures, by using a TCI state, a QCL reference signal of a downlink signal or a downlink channel as an SSB 2 or CSI-RS 2 resource, and configures a QCL type as typeD, the terminal device may use a same Spatial Rx parameter as that for receiving the SSB 2 or CSI-RS 2 resource to receive the downlink signal or downlink channel. Generally, the downlink signal or downlink channel as well as the SSB 2 or CSI-RS 2 resource are sent by a same TRP, a same antenna panel, or a same beam on a network device side. It should be understood that if the transmission TRPs, transmission panels, or transmit beams of two downlink signals (or downlink channels) are different, the network device usually indicates different TCI states for the two downlink signals (or downlink channels).

The downlink channels include a Physical Downlink Control Channel (PDCCH) and a Physical Downlink Shared Channel (PDSCH).

For a PDCCH, a TCI state may be indicated by using Radio Resource Control (RRC) signaling or RRC signaling plus Medium Access Control (MAC) signaling.

For a PDSCH, a TCI state set may be indicated by using RRC signaling, some TCI states in the TCI state set may be activated by using MAC layer signaling, and finally one or two TCI states may be indicated from the activated TCI states by using a TCI state indication field in DCI for the PDSCH scheduled by the DCI.

3. Unified TCI state

The foregoing TCI states are only applicable to downlink channels and downlink signals, and have many limitations in application in an NR system. To provide a more unified uplink and downlink beam management mechanism for the NR system, based on the foregoing technology, the 3rd Generation Partnership Project (3GPP) proposes a concept of a unified TCI state. Specifically, two modes of a unified TCI state are designed.

Mode 1: including one type of TCI state, where this type of TCI state is applicable to uplink and downlink channels and signals, and is usually referred to as a joint TCI state.

Mode 2: including two types of TCI states: a downlink TCI state (DL TCI state) and an uplink TCI state (UL TCI state). The DL TCI state is only applicable to downlink channels and signals; and the UL TCI state is only applicable to uplink channels and signals. This type of TCI state may be referred to as a separate TCI state. The NW may configure only one type of TCI state, for example, only a downlink TCI state or only an uplink TCI state; the network may also configure the two types of TCI states simultaneously, for example, the network configures both a downlink TCI state and an uplink TCI state.

It should be understood that a downlink channel (e.g., PDCCH, PDSCH) and a downlink signal (e.g., aperiodic CSI-RS) may use a same downlink transmit beam indication, for example, a DL TCI state or a joint TCI state is used to indicate a downlink transmit beam.

An uplink channel (e.g., Physical Uplink Control Channel (PUCCH), Physical Uplink Shared Channel (PUSCH)) and an uplink signal (e.g., Sounding Reference Signal (SRS)) may use a same uplink transmit beam indication, for example, a UL TCI state or a joint TCI state is used to indicate an uplink transmit beam.

It should be noted that the unified TCI state is applicable to a carrier aggregation scenario, and a TCI state configuration and/or indication on a single CC may be applicable to a plurality of different CCs.

As implied by the name of the unified TCI state, "unified" herein has meanings in multiple aspects. A first meaning of "unified" is that it unifies an uplink and downlink beam indication mechanism, because in NR standards of R15/R16, a TCI state is only used for indicating a downlink beam, and signaling based on spatial relation information is used for indicating an uplink beam. A second meaning of "unified" is that beams between different channels are unified. For example, under configuration of a DL/UL TCI state, a terminal device considers that a PDCCH (UE-specific) and a PDSCH (UE-specific) are transmitted using a same beam; in addition, the terminal device may transmit a PUCCH and a PUSCH by using a same beam. Under configuration of a joint TCI state, the terminal device considers that good beam symmetry can be guaranteed for different uplink and downlink channels and signals, that is, symmetric beam pairs are used for uplink and downlink communication.

It should be noted that the "TCI state" described below refers to a unified TCI state unless otherwise specified.

R18 supports indication of a unified TCI state for mTRP. The unified TCI state may be indicated using one or more of the following signaling: RRC signaling, a MAC Control Element (MAC CE), and DCI. A TCI state indicated by signaling may be called an "indicated TCI state". Manners for a NW to indicate a TCI state by using signaling include:

Manner 1: The NW configures N1 TCI states by using RRC signaling, where a value of N1 depends on implementation of the NW, and exemplarily, $1 \leq N1 \leq 2$. All the N1 TCI states are "indicated TCI states".

Manner 2: The NW configures N2 TCI states by using RRC signaling, where a value of N2 depends on implementation of the NW, exemplarily, $1 \leq N2 \leq 128$, and activates M1 TCI states among the N2 TCI states by using a MAC CE, where a value of M1 depends on NW implementation, exemplarily, $1 \leq M1 \leq 2$. All the M1 TCI states are "indicated TCI states".

Manner 3: The NW configures N2 TCI states by using RRC signaling, where a value of N2 depends on implementation of the NW, exemplarily, $1 \leq N2 \leq 128$; activates M2 TCI states among the N2 TCI states by using a MAC CE, where a value of M2 depends on implementation of the NW, exemplarily, $1 \leq M2 \leq 8$; and finally indicates K TCI states among the activated M2 TCI states by using a TCI state indication field in DCI, where a value of K depends on implementation of the NW, exemplarily, $1 \leq K \leq 2$. All the K TCI states are "indicated TCI states".

It should be noted that in an mTRP system, different indicated TCI states correspond to different TRPs. For example, the NW indicates two TCI states by using the foregoing manner. It may be understood that both the two TCI states are "indicated TCI states", which are respectively referred to as a first indicated TCI state and a second indicated TCI state. The first indicated TCI state corresponds to a first TRP, and the second indicated TCI state corresponds to a second TRP. An indicated TCI state corresponding to a TRP is used for downlink transmission and/or uplink transmission of the TRP. For example, the indicated TCI state corresponding to the TRP is a DL TCI state or a joint TCI state, and the indicated TCI state is used for downlink transmission of the TRP; for another example, the indicated TCI state corresponding to the TRP is a UL TCI state or a joint TCI state, and the indicated TCI state is used for uplink transmission of the TRP.

For configuration of a TCI state by using RRC signaling, content carried in the RRC signaling may be referred to Table 1 below:

```
DLorJoint-TCIState-r17 ::=         SEQUENCE {
    tci-StateUnifiedId-r17          TCI-StateId,
    qcl-Type1-r17                   QCL-Info,
    qcl-Type2-r17                   QCL-Info         OPTIONAL,     -- Need R
    ul-powerControl-r17             Uplink-powerControlId-r17 OPTIONAL,     -- Need R
    pathlossReferenceRS-Id-r17      PUSCH-PathlossReferenceRS-Id   OPTIONAL      -- Need S
}

UL-TCIState-r17 ::=                   SEQUENCE {
    ul-TCIState-Id-r17                  UL-TCIState-Id-r17,
    servingCellId-r17                   ServCellIndex       OPTIONAL,     -- Need S
    referenceSignal-r17                 CHOICE {
        ssb-Index-r17                       SSB-Index,
        csi-RS-Index-r17                    NZP-CSI-RS-ResourceId,
        srs-r17                             PUCCH-SRS
    },
    additionalPCI-r17                   AdditionalPCIIndex-r17   OPTIONAL,     -- Need R
    ul-powerControl-r17                 Uplink-powerControlId-r17   OPTIONAL,     -- Need R
    pathlossReferenceRS-Id-r17          PUSCH-PathlossReferenceRS-Id OPTIONAL       -- Need S
}
```

Table 1

As shown in Table 1, Table 1 presents DLorJoint-TCIState-r17 (i.e., configuration of a DL TCI state or a joint TCI state) and UL-TCIState-r17 (i.e., configuration of a UL TCI state). DLorJoint-TCIState-r17 includes: tci-StateUnifiedId-r17 (i.e., TCI state identifier), qcl-Type1-r17 (i.e., QCL type 1 configuration), qcl-Type2-r17 (i.e., QCL type 2 configuration), ul-powerControl-r17 (i.e., uplink power control configuration), and pathlossReferenceRS-Id-r17 (i.e., pathloss reference signal configuration). UL-TCIState-r17 includes: ul-TCIState-Id (i.e., TCI state identifier), servingCellId-r17 (i.e., serving cell identifier), referenceSignal-r17 (i.e., reference signal configuration), ul-powerControl-r17 (i.e., uplink power control configuration), and pathlossReferenceRS-Id-r17 (i.e., pathloss reference signal configuration).

For a DL TCI state or a joint TCI state, the QCL type configuration may be one of QCL type-A, QCL typeB, QCL typeC, and QCL typeD. Definitions of different QCL types may refer to the foregoing related descriptions.

For a UL TCI state, the QCL type configuration can only be QCL typeD, and cannot be QCL type-A, QCL typeB, or QCL typeC.

In addition, when a TCI state is configured by using RRC signaling, a parameter unifiedTCI-StateType-r17 may also be used to distinguish whether the configured TCI state is a joint TCI state or a separate TCI state.

For activation of a TCI state by using a MAC CE, a structure of the MAC CE may refer to FIG. 2, including the following fields:

a Serving Cell ID field: which indicates an identifier of a serving cell to which the MAC CE is applicable;
a DL BWP ID field: which indicates an identifier of a downlink BWP to which the MAC CE is applicable;
a UL BWP ID field: which indicates an identifier of an uplink BWP to which the MAC CE is applicable;
a Pi field (1an idenwhich indicates whether each TCI code point includes multiple TCI states or a single TCI state; if the field is set to 1, the field indicates that an i-th TCI code point includes a DL TCI state and a UL TCI state; if the field is set to 0, the field indicates that an i-th TCI code point includes only a DL/joint TCI state or a UL TCI state; a TCI code point corresponding to a TCI state is determined based on a sorting position of the TCI state in the field of all TCI state identifiers;
a D/U field: which indicates whether a TCI state identifier in a same byte corresponds to a DL/joint TCI state or a UL TCI state; if the field is set to 1, the field indicates that the TCI state identifier in the same byte is used to indicate a DL/joint TCI state; if the field is set to 0, the field indicates that the TCI state identifier in the same byte is used to indicate a UL TCI state;
a TCI state ID field: which indicates a TCI state; if the D/U field is set to 1, all 7 bits of the field are used to indicate a DL/joint TCI state; if the D/U field is set to 0, 6 bits of the field are used to indicate a UL TCI state; and
an R field: which is a reserved field (i.e., reserved bits), and bits of the field are set to 0.

For indication of a TCI state by using DCI, the NW may use a TCI state indication field in DCI format 1_1/1_2 to indicate a TCI state. One state of the TCI state indication field corresponds to one code point, and the code point is used to indicate one TCI state activated by the MAC CE. For example, a state "000" of the TCI state indication field corresponds to one code point, and the code point corresponds to TCI state ID 1 activated by the MAC CE and is used to indicate a TCI state corresponding to TCI state ID 1; a state "111" of the TCI state indication field corresponds to another code point, and the code point corresponds to TCI state ID 8 activated by the MAC CE and is used to indicate a TCI state corresponding to TCI state ID 8.

## 4. Uplink Power Control

Uplink power control refers to performing power control on an uplink signal or an uplink channel. The uplink signal or uplink channel includes: a PUSCH, a PUCCH, an SRS, and a Physical Random Access Channel (PRACH).

### 1) PUSCH Power Control

A power control mechanism of the PUSCH includes two parts: open-loop power control and closed-loop power control. Open-loop power control parameters are configured or reconfigured by a network device by using RRC signaling, which is a slow and semi-static power adjustment manner. Closed-loop power control may quickly adjust power by using physical layer signaling (e.g., DCI).

Transmit power of the PUSCH is calculated by using the following Formula (1):

$$
\begin{aligned}
&P_{\text{PUSCH},b,f,c}(i, j, q_d, l) \\
&= min\left\{ \begin{array}{l} P_{\text{CMAX},f,c}(i), \\ P_{\text{O\_PUSCH},b,f,c}(j) + 10\,log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array} \right\} \\
&\quad [\text{dBm}] \\
&\qquad (1)
\end{aligned}
$$

where:

b: denotes a BWP;
f: denotes a carrier;
c: denotes a serving cell;
i: denotes a transmission occasion;
j: denotes a parameter configuration index;
qd: denotes an index of a reference signal used for pathloss measurement;
l: denotes an index of a closed-loop power control adjustment state; and
$\mu$: denotes a subcarrier spacing factor.
Open-loop power control parameters in Formula (1) include:
PO_PUSCH,b,f,c(j): denotes target received power of the PUSCH;
$\alpha_{b,f,c}(j)$: denotes a pathloss compensation factor; and
$PL_{b,f,c}(q_d)$: denotes a pathloss, where the pathloss is measured according to a reference signal used for pathloss measurement.

Closed-loop power control parameters in Formula (1) include:
$f_{b,f,c}(i,l)$: denotes a closed-loop power control adjustment state, including an accumulated closed-loop power control state and an absolute closed-loop power control state.

Other power control parameters in Formula (1) include:

$P_{\text{CMAX},f,c}(i)$: denotes maximum transmit power of a terminal device on carrier f of serving cell c;

$M_{\text{RB},b,f,c}^{\text{PUSCH}}(i)$ : denotes a transmission bandwidth of the PUSCH, expressed by the number of RBs; and

$\Delta_{\text{TF},b,f,c}(i)$: denotes a rate-related power compensation factor.

It should be noted that if DCI includes an SRS Resource Indication (SRI) field, and NR supports use of RRC signaling to configure a mapping relationship between open-loop power parameters, closed-loop power parameters and the SRI field in the DCI, then the open-loop power parameters and closed-loop power parameters may be indicated by states of the SRI field in the DCI.

It should be noted that $PL_{b,f,c}(q_d)$ denotes a pathloss, which may be determined by the following formula:

$$PL_{b,f,c}(q_d) = referenceSignalPower - \text{higher layer filtered RSRP}.$$

The "higher layer filtered RSRP" represents higher layer filtered Reference Signal Receiving Power (RSRP), where the RSRP is obtained by a terminal device by measuring a downlink reference signal. Higher layer parameter referenceSignalPower is determined as follows:

If the terminal device is not configured to periodically receive a CSI-RS, referenceSignalPower is determined according to ss-PBCH-BlockPower, where ss-PBCH-BlockPower is SSB transmit power;

If the terminal device is configured to periodically receive a CSI-RS, referenceSignalPower is determined according to ss-PBCH-BlockPower, or according to ss-PBCH-BlockPower and powerControlOffsetSS, where power-ControlOffsetSS is a power offset of CSI-RS transmit power relative to SSB transmit power.

It should be noted that referenceSignalPower may be understood as transmit power of a downlink reference signal sent by a network device, and higher layer filtered RSRP may be understood as received power of a downlink reference signal sent by a network device and received by a terminal device. A difference between referenceSignalPower and higher layer filtered RSRP is a pathloss between the terminal device and the network device.

2) PUCCH Power Control

Similar to the PUSCH, a power control mechanism of the PUCCH also includes two parts: open-loop power control and closed-loop power control.

Transmit power of the PUCCH is calculated by using the following Formula (2):

$$P_{\text{PUCCH},b,f,c}(i, q_u, q_d, l) =$$

$$min \left\{ \begin{array}{c} P_{\text{CMAX},f,c}(i), \\ P_{\text{O\_PUCCH},b,f,c}(q_u) + 10\,log_{10}(2^{\mu} \cdot M^{\text{PUCCH}}_{\text{RB},b,f,c}(i)) + PL_{b,f,c}(q_d) + \Delta_{\text{F\_PUCCH}}(F) + \Delta_{\text{TF},b,f,c}(i) + g_{b,f,c}(i,l) \end{array} \right\}$$

$$[\text{dBm}]$$

$$(2)$$

where:

b: denotes a BWP;
f: denotes a carrier;
c: denotes a serving cell;
i: denotes a transmission occasion;
qd: denotes an index of a reference signal used for pathloss measurement;
l: denotes an index of a closed-loop power control adjustment state;
μ: denotes a subcarrier spacing factor; and
qu: denotes an index of parameter $P_{\text{O\_PUCCH},b,f,c}(q_u)$.

Open-loop power control parameters in Formula (2) include:

$P_{\text{O\_PUCCH},b,f,c}(q_u)$: denotes target received power of PUCCH; and
$PL_{b,f,c}(q_d)$: denotes a pathloss, where the pathloss is measured according to a reference signal used for pathloss measurement; a value of a pathloss compensation factor for the PUCCH is 1.

Closed-loop power control parameters in Formula (2) include:
$g_{b,f,c}(i,l)$: denotes an adjustment state of PUCCH closed-loop power control.

Other power control parameters in Formula (2) include:

$P_{\text{CMAX},f,c}(i)$: denotes maximum transmit power of a terminal device on carrier f of serving cell c;

$M^{\text{PUCCH}}_{\text{RB},b,f,c}(i)$ : denotes a transmission bandwidth of the PUCCH, expressed by the number of RBs;

$\Delta_{\text{TF},b,f,c}(i)$: denotes a rate-related power compensation factor; and
$\Delta_{\text{F\_PUCCH}}(F)$: denotes a PUCCH power adjustment value related to a PUCCH format.

It should be noted that if the terminal device is configured with spatial relation information (e.g., beam information), open-loop power control parameters and closed-loop power control parameters of the PUCCH may be determined using the spatial relation information according to a mapping relationship, configured by RRC signaling, between spatial relation information and power control parameters.

3) SRS Power Control

Similar to the PUSCH and the PUCCH, a power control mechanism of the SRS also includes two parts: open-loop power control and closed-loop power control.

Transmit power of the SRS is calculated by using the following Formula (3):

$$P_{SRS,b,f,c}(i, q_s, l) =$$
$$\min\left\{ \begin{matrix} P_{CMAX,f,c}(i), \\ P_{O\_SRS,b,f,c}(q_s) + 10\log_{10}(2^{\mu} \cdot M_{SRS,b,f,c}(i)) + \alpha_{SRS,b,f,c}(q_s) \cdot PL_{b,f,c}(q_d) + h_{b,f,c}(i,l) \end{matrix} \right\}$$
$$[dBm]$$
$$(3)$$

where:

b: denotes a BWP;
f: denotes a carrier;
c: denotes a serving cell;
i: denotes a transmission occasion;
qd: denotes an index of a reference signal used for pathloss measurement;
l: denotes an index of a closed-loop power control adjustment state;
$\mu$: denotes a subcarrier spacing factor; and
qs: denotes an index of an SRS resource set.

Open-loop power control parameters in Formula (3) include:

$P_{O\_SRS,b,f,c}(q_s)$: denotes target received power of SRS;
$\alpha_{SRS,b,f,c}(q_s)$: denotes a pathloss compensation factor; and
$PL_{b,f,c}(q_d)$: denotes a pathloss, where the pathloss is measured according to a reference signal used for pathloss measurement.

Closed-loop power control parameters in Formula (3) include:
$h_{b,f,c}(i,l)$: denotes an adjustment state of SRS closed-loop power control.

Other power control parameters in Formula (3) include:

$P_{CMAX,f,c}(i)$: denotes maximum transmit power of a terminal device on carrier f of serving cell c; and
$M_{SRS,b,f,c}(i)$: denotes a transmission bandwidth of SRS, expressed by the number of RBs.

It should be noted that SRS power control is performed based on an SRS resource set, and SRS resources in one SRS resource set adopt the same power control parameters.

An SRS resource set index of open-loop power control parameters $P_{O\_SRS,b,f,c}(q_s)$ and $\alpha_{SRS,b,f,c}(q_s)$ and a reference signal index used for calculating a pathloss $PL_{b,f,c}(q_d)$ are both configured based on a resource set, and are configured by RRC signaling.

A closed-loop power control parameter $h_{b,f,c}(i,l)$ may be indicated by RRC signaling to adopt a same closed-loop power adjustment state as that associated with a PUSCH closest in time domain, or adopt an independent closed-loop power control adjustment state.

4) PRACH Power Control

Transmit power of the PRACH is calculated by using the following Formula (4):

$$P_{PRACH,b,f,c}(i) = \min \left\{ \begin{array}{c} P_{CMAX,f,c}(i), \\ P_{PRACH,target,f,c} + PL_{b,f,c} \end{array} \right\} \text{[dBm] (4)}$$

where:

b: denotes a BWP;

f: denotes a carrier;

c: denotes a serving cell;

i: denotes a transmission occasion;

$P_{PRACH,target,f,c}$: denotes target received power of the PRACH, provided by a higher layer parameter PREAMBLE_RECEIVED_TARGET_POWER;

$PL_{b,f,c}$: denotes a pathloss; and

$P_{CMAX,f,c}(i)$: denotes maximum transmit power of a terminal device on carrier f of serving cell c.

It should be noted that the above Formula (1) to Formula (4) may all be referred to as power control formulas.

DCI format 2_2 may be used to perform power control on the PUCCH and the PUSCH. DCI format 2_2 is scrambled by using a special Radio Network Temporary Identity (RNTI), i.e., TPC-PUSCH-RNTI or TPC-PUCCH-RNTI. DCI format 2_2 scrambled by the TPC-PUSCH-RNTI may perform power control on the PUSCH, and DCI format 2_2 scrambled by the TPC-PUCCH-RNTI may perform power control on the PUCCH. Content transmitted in DCI format 2_2 is as follows:

block number 1, block number 2, ..., block number n.

A block number in an uplink of a serving cell corresponding to the PUSCH may be determined by using a parameter tpc-PUSCH, and a block number in an uplink of a serving cell corresponding to the PUCCH may be determined by using a parameter tpc-PUCCH. Each block number includes the following information: a closed-loop indication (0 or 1 bit), and a Transmit Power Control (TPC) command (2 bits). Here, the TPC command is used to indicate a power adjustment amount, and 2 bits of the TPC command may correspond to four values, namely {-1 dB, 0 dB, 1 dB, 3 dB}.

In an uplink power control mechanism, obtaining a pathloss between a terminal device and a network device is a key factor of uplink power control. However, for some special types of network devices, such as an uplink TRP, since such a network device does not have any downlink transmission and naturally does not have a downlink reference signal, the terminal device cannot estimate a pathloss between the terminal device and the network device by measuring the downlink reference signal. Therefore, the pathloss part in the power control formulus cannot be calculated, resulting in that the terminal device cannot perform uplink power control for such a type of network device. To this end, the following technical solutions of embodiments of the present disclosure are proposed.

To facilitate understanding of the technical solutions of the embodiments of the present disclosure, the technical solutions of the present disclosure are described in detail below through specific embodiments. The above related technologies may be arbitrarily combined with the technical solutions of the embodiments of the present disclosure as optional solutions, all of which fall within the protection scope of the embodiments of the present disclosure. The embodiments of the present disclosure include at least part of the following content.

It should be noted that the network device in the embodiments of the present disclosure may be a TRP, and the TRP may also be described in other manners, such as an access point, a transmission point, a base station, etc.

It should be noted that a Path Loss Reference Signal (PL RS) in the embodiments of the present disclosure refers to a downlink reference signal used for pathloss measurement, such as an SSB or a CSI-RS.

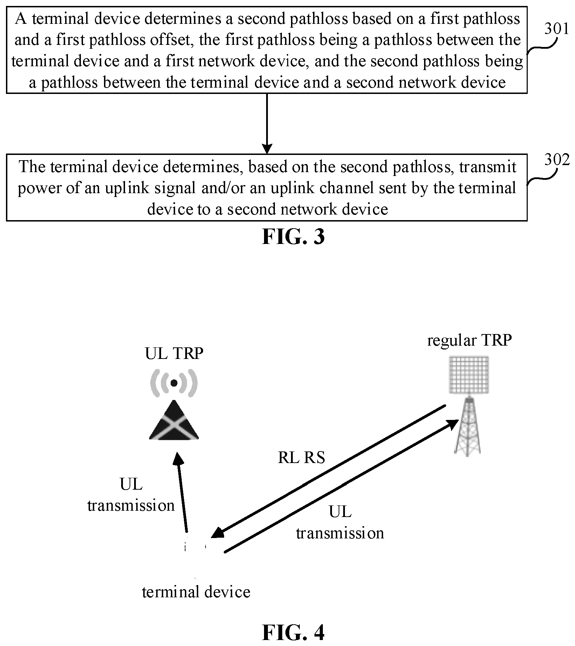

FIG. 3 is a first schematic flowchart of a power control method provided by an embodiment of the present disclosure. As shown in FIG. 3, the power control method includes at least part of the following content:

Operation 301: A terminal device determines a second pathloss based on a first pathloss and a first pathloss offset, the first pathloss being a pathloss between the terminal device and a first network device, and the second pathloss being a pathloss between the terminal device and a second network device.

In the embodiments of the present disclosure, the first network device supports downlink transmission. In some implementations, the first network device may send a PL RS, and the terminal device may obtain the pathloss between the terminal device and the first network device, i.e., the first pathloss, by measuring the PL RS. The first pathloss is equal to transmit power of the PL RS sent by the first network device minus received power of the PL RS sent by the network device and received by the terminal device.

In some implementations, the first network device is a regular TRP. The regular TRP may also be referred to as an uplink and downlink TRP. The regular TRP supports uplink transmission and downlink transmission. The terminal device may send an uplink signal and/or an uplink channel to the regular TRP, and the terminal device may also receive a downlink signal and/or a downlink channel from the regular TRP, for example, the terminal device may receive the PL RS sent by the regular TRP.

In other implementations, the first network device is a downlink-only TRP (DL-only TRP). The DL-only TRP may also be referred to as a downlink TRP. The downlink TRP only supports downlink transmission. The terminal device may receive a downlink signal and/or a downlink channel from the downlink TRP, for example, the terminal device may receive the PL RS sent by the downlink TRP.

In the embodiments of the present disclosure, the second network device supports uplink transmission. Optionally, the second network device does not support downlink transmission.

In some implementations, the second network device is an uplink-only TRP (UL-only TRP). The UL-only TRP may also be referred to as an uplink TRP. The uplink TRP only supports uplink transmission. The terminal device may send an uplink signal and/or an uplink channel to the uplink TRP, but cannot receive a downlink signal and/or a downlink channel from the uplink TRP, for example, the terminal device cannot receive the PL RS sent by the uplink TRP.

Since the terminal device cannot estimate the pathloss between the terminal device and the second network device by receiving the PL RS sent by the second network device, a mechanism is required to determine the pathloss between the terminal device and the second network device. To this end, the solutions of the embodiments of the present disclosure introduce the concept of "pathloss offset". A pathloss offset refers to an offset of a pathloss relative to another pathloss, and another pathloss may be determined based on the pathloss offset and the pathloss. In the embodiments of the present disclosure, the first pathloss offset is an offset of the pathloss between the terminal device and the second network device relative to the pathloss between the terminal device and the first network device. The terminal device may determine the pathloss between the terminal device and the second network device (i.e., the second pathloss) based on the pathloss between the terminal device and the first network device (i.e., the first pathloss) and the first pathloss offset. For example, when the pathloss between the terminal device and the first network device is 60 dB and the first pathloss offset is -20 dB, the pathloss between the terminal device and the second network device is 60 dB + (-20 dB) = 40 dB.

In an example, the first network device is a regular TRP and the second network device is an uplink TRP. FIG. 4 is a schematic diagram of a scenario in which an uplink TRP and a regular TRP are used in combination. The regular TRP sends a PL RS, the terminal device may measure the PL RS to obtain received power of the PL RS, and the pathloss between the terminal device and the regular TRP (i.e., the first pathloss) may be obtained by subtracting the received power of the PL RS from the transmit power of the PL RS. The terminal device may add the first pathloss offset to the first pathloss to obtain the pathloss between the terminal device and the uplink TRP (i.e., the second pathloss). For uplink transmission from the terminal device to the regular TRP, the terminal device may use the first pathloss as the pathloss in a power control formula to calculate transmit power of an uplink signal or an uplink channel. For uplink transmission from the terminal device to the uplink TRP, the terminal device may use the second pathloss as the pathloss in the power control formula to calculate transmit power of an uplink signal or an uplink channel.

In the embodiments of the present disclosure, determination of the second pathloss is related to the first pathloss and the first pathloss offset. For the manner of obtaining the first pathloss, reference may be made to the foregoing related descriptions, i.e., the first pathloss may be obtained by the terminal device by measuring the PL RS sent by the first network device. The manner of obtaining the first pathloss offset is described below.

Solution 1

In some implementations, the terminal device sends an uplink reference signal to the first network device and the second network device. The first network device and the second network device receive the uplink reference signal sent by the terminal device. The first pathloss offset is determined based on first received power and second received power, where the first received power is received power corresponding to reception of the uplink reference signal by the first network device, and the second received power is received power corresponding to reception of the uplink reference signal by the second network device.

In some implementations, the uplink reference signal may be an SRS.

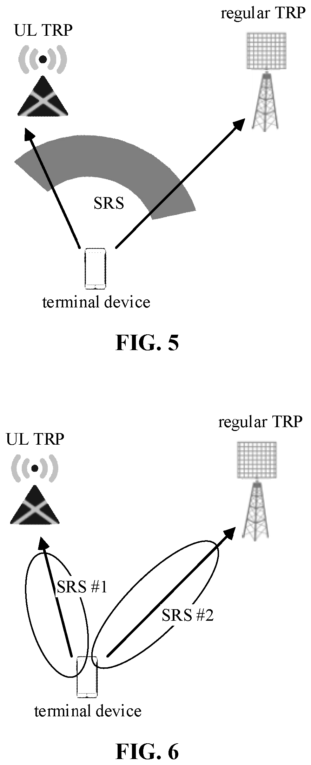

In an example, as shown in FIG. 5, in a low band (e.g., Frequency Range 1 (FR1)), the terminal device may simultaneously send an SRS to the uplink TRP and the regular TRP by using a relatively wide beam. The uplink TRP and the regular TRP may respectively measure received power of the SRS. The received power of the SRS measured by the uplink TRP is denoted as SRS_RSRP#1, and the received power of the SRS measured by the regular TRP is denoted as SRS_RSRP#2. A formula for the NW to calculate the first pathloss offset is: SRS_RSRP#2 - SRS_RSRP#1.

Solution 2

In some implementations, the terminal device sends a first uplink reference signal to the first network device and a second uplink reference signal to the second network device. The first network device receives the first uplink reference signal sent by the terminal device, and the second network device receives the second uplink reference signal sent by the terminal device. The first pathloss offset is determined based on first received power and second received power, where the first received power is received power corresponding to reception of the first uplink reference signal by the first network device, and the second received power is received power corresponding to reception of the second uplink reference signal by the second network device. Here, transmit power of the second uplink reference signal is the same as transmit power of the first uplink reference signal.

In some implementations, the uplink reference signal may be an SRS.

In some implementations, the terminal device sends the first uplink reference signal by using a first spatial filter (corresponding to a first beam), and sends the second uplink reference signal by using a second spatial filter (corresponding to a second beam). The first spatial filter is determined based on an indicated TCI state corresponding to the first network device, and the second spatial filter is determined based on an indicated TCI state corresponding to the second network device. For the definition of the indicated TCI state, reference may be made to the foregoing related descriptions. For ease of distinction, the indicated TCI state corresponding to the first network device may be referred to as a first indicated TCI state, and the indicated TCI state corresponding to the second network device may be referred to as a second indicated TCI state. The type of the first indicated TCI state is a UL TCI state or a joint TCI state, and is used for the terminal device to send the first uplink reference signal to the first network device. The type of the second indicated TCI state is also a UL TCI state or a joint TCI state, and is used for the terminal device to send the second uplink reference signal to the second network device.

In some descriptions, "the terminal device sends the first uplink reference signal by using the first spatial filter (corresponding to the first beam), and sends the second uplink reference signal by using the second spatial filter (corresponding to the second beam)" may also be described as "the terminal device sends the first uplink reference signal by using the first indicated TCI state, and sends the second uplink reference signal by using the second indicated TCI state".

In some descriptions, "the terminal device sends the first uplink reference signal" may also be described as "the terminal device sends a first uplink reference signal resource", and "the terminal device sends the second uplink reference signal" may also be described as "the terminal device sends a second uplink reference signal resource".

In an example, as shown in FIG. 6, in a high band (e.g., FR2), the terminal device sends SRS#1 by using the first indicated TCI state, and sends SRS#2 by using the second indicated TCI state. The first indicated TCI state corresponds to the uplink TRP, and the second indicated TCI state corresponds to the regular TRP. The uplink TRP measures received power of SRS#1, and the measured received power of SRS#1 is denoted as SRS_RSRP#1. The regular TRP measures received power of SRS#2, and the measured received power of SRS#2 is denoted as SRS _RSRP#2. It is assumed that transmit power of SRS#1 is P_SRS1 and transmit power of SRS#2 is P_SRS2. A formula for the NW to calculate the first pathloss offset is:

$$(P\_SRS1 - SRS\_RSRP\#1) - (P\_SRS2 - SRS\_RSRP\#2);$$

If P_SRS1 = P_SRS2, then the calculation formula of the first pathloss offset reverts to be the same as that in Solution 1, namely: SRS_RSRP#2 - SRS_RSRP#1.

Solution 3

In some implementations, the terminal device sends a first uplink reference signal to the first network device and a second uplink reference signal to the second network device. The first network device receives the first uplink reference signal sent by the terminal device, and the second network device receives the second uplink reference signal sent by the terminal device. The first pathloss offset is determined based on first transmit power, second transmit power, first received power and second received power. The first transmit power is transmit power of the first uplink reference signal, the second transmit power is transmit power of the second uplink reference signal, the first received power is received power corresponding to reception of the first uplink reference signal by the first network device, and the second received power is received power corresponding to reception of the second uplink reference signal by the second network device. Here, the transmit power of the second uplink reference signal is determined based on the transmit power of the first uplink reference signal and a first power offset. In some implementations, the first power offset is predefined or configured by a network.

In some implementations, the uplink reference signal may be an SRS.

In some implementations, the terminal device sends the first uplink reference signal by using a first spatial filter (corresponding to a first beam), and sends the second uplink reference signal by using a second spatial filter (corresponding to a second beam). The first spatial filter is determined based on an indicated TCI state corresponding to the first network device, and the second spatial filter is determined based on an indicated TCI state corresponding to the second network device. For the definition of the indicated TCI state, reference may be made to the foregoing related descriptions. For ease of distinction, the indicated TCI state corresponding to the first network device may be referred to as a first indicated TCI state, and the indicated TCI state corresponding to the second network device may be referred to as a second indicated TCI state. The type of the first indicated TCI state is a UL TCI state or a joint TCI state, and is used for the terminal device to send the first uplink reference signal to the first network device. The type of the second indicated TCI state is also a UL TCI state or a joint TCI state, and is used for the terminal device to send the second uplink reference signal to the second network device.

In some descriptions, "the terminal device sends the first uplink reference signal by using the first spatial filter (corresponding to the first beam), and sends the second uplink reference signal by using the second spatial filter (corresponding to the second beam)" may also be described as "the terminal device sends the first uplink reference signal by using the first indicated TCI state, and sends the second uplink reference signal by using the second indicated TCI state".

In some descriptions, "the terminal device sends the first uplink reference signal" may also be described as "the terminal device sends a first uplink reference signal resource", and "the terminal device sends the second uplink reference signal" may also be described as "the terminal device sends a second uplink reference signal resource".

In an example, as shown in FIG. 6, in a high band (e.g., FR2), the terminal device sends SRS#1 by using the first indicated TCI state, and sends SRS#2 by using the second indicated TCI state. The first indicated TCI state corresponds to the uplink TRP, and the second indicated TCI state corresponds to the regular TRP. The uplink TRP measures received power of SRS#1, and the measured received power of SRS#1 is denoted as SRS_RSRP#1. The regular TRP measures received power of SRS#2, and the measured received power of SRS#2 is denoted as SRS _RSRP#2. It is assumed that transmit power of SRS#1 is P_SRS1 and transmit power of SRS#2 is P_SRS2. A formula for the NW to calculate the first pathloss offset is:

$$(P\_SRS1 - SRS\_RSRP\#1) - (P\_SRS2 - SRS\_RSRP\#2);$$

If P_SRS1 = P_SRS2 + P_offset, then the calculation formula of the first pathloss offset is simplified to: SRS_RSRP#2 - SRS_RSRP#1 + P_offset. Here, P_offset represents the first power offset, which may be predefined or configured by the network through signaling (e.g., RRC signaling).

In some implementations, the value of the first power offset may be negative. In this case, the first pathloss offset is relatively small, and thus the transmit power of an uplink signal or an uplink channel determined according to the uplink power control formula is relatively small. When the terminal device is relatively close to the first network device, reducing the transmit power of the uplink signal and/or uplink channel sent by the terminal device to the first network device can avoid interference of the uplink signal and/or uplink channel on other signals.

Any one of the foregoing Solutions 1 to 3 may enable the NW to measure an uplink reference signal sent by the terminal device to determine the first power offset. Subsequently, the NW may configure and/or indicate the first power offset to the terminal device, so that after obtaining the first power offset, the terminal device may determine the pathloss between the terminal device and the second network device (i.e., the second pathloss) based on the first power offset and the pathloss between the terminal device and the first network device (i.e., the first pathloss). An implementation manner in which the NW configures and/or indicates the first power offset to the terminal device is as follows: the NW sends signaling to the terminal device, where the signaling is used to determine the first pathloss offset; the first pathloss offset and the first pathloss are used for the terminal device to determine the second pathloss; and the second pathloss is used for the terminal device to determine transmit power of an uplink signal and/or an uplink channel sent to the second network device. In some implementations, the NW may be the first network device supporting downlink transmission or another network device supporting downlink transmission. Implementation manners in which the NW configures and/or indicates the first power offset to the terminal device through signaling may include, but are not limited to, the following solutions.

In the following Solutions 4 to 8, a pathloss offset is associated with a unified TCI state. In the unified TCI state, the NW may selectively configure a PL RS (e.g., configuring the PL RS by using a parameter pathlossReferenceRS-Id-r17) and other power control parameters (e.g., an uplink power control parameter ul-powerControl-r17). On this basis, the following Solutions 4 to 8 provide multiple enhanced solutions. It should be noted that the signaling involved in the following solutions (e.g., any one of first signaling, second signaling, third signaling, and fourth signaling) may come from the first network device supporting downlink transmission or from another network device supporting downlink transmission. For example: the operation that the NW sends signaling (e.g., any one of the first signaling, the second signaling, the third signaling, and the fourth signaling) to the terminal device may mean that the first network device or another network device supporting downlink transmission sends the signaling to the terminal device.

Solution 4

In some implementations, the NW sends first signaling to the terminal device, and the terminal device receives the first signaling. The first signaling is used to configure N TCI states, each TCI state among the N TCI states is associated with one PL RS and one pathloss offset, and N is a positive integer.

Here, the type of the TCI state is a UL TCI state or a joint TCI state, and the UL TCI state or the joint TCI state is used for the terminal device to transmit an uplink signal and/or an uplink channel.

Here, the first signaling comes from the first network device (the first network device supports downlink transmission) or from another network device supporting downlink transmission.

In some implementations, the first signaling is RRC signaling. The NW configures N TCI states by using RRC signaling, and each TCI state among the N TCI states is associated with one PL RS and one pathloss offset. In other words, the configuration of each TCI state among the N TCI states includes one PL RS and one pathloss offset.

In some implementations, there are two configuration manners of the pathloss offset. The first is an INTEGER configuration manner, where the value of the pathloss offset may be configured from an integer X to an integer Y, for example, from -40 dB to 20 dB. The second is an ENUMERATED configuration manner, for example, one value is selected from four values A, B, C, and D for configuration.

In an example, Table 2 below shows configuration content of a TCI state.

```
TCI-State ::=                     SEQUENCE {
    tci-StateId                      TCI-StateId,
    qcl-Type1                        QCL-Info,
    qcl-Type2                        QCL-Info            OPTIONAL,    -- Need R
    ...,
    [[
    additionalPCI-r17                AdditionalPCIIndex-r17      OPTIONAL,    -- Need R
    pathlossReferenceRS-Id-r17         PathlossReferenceRS-Id-r17   OPTIONAL,    -- Cond
JointTCI1
    ul-powerControl-r17              Uplink-powerControlId-r17   OPTIONAL     -- Cond
JointTCI
    ]]
    [[
    plOffset-r19                     SEQUENCE (SIZE (1)) OF PLOffset-Id-r19
    ]]
    }


PLOffset-r19 ::=                   SEQUENCE {
    PLOffset-Id                      PLOffset-Id-r19
    PLOffset                         INTEGER(X…Y)
    }


PLOffset-r19 ::=                   SEQUENCE {
    PLOffset-Id                      PLOffset-Id-r19
    PLOffset                         ENUMERATED(A,B,C,D)
    }
```

Table 2

As shown in Table 2, the configuration of a TCI state includes: tci-StateId (i.e., a TCI state identifier), qcl-Type1 (i.e., QCL type 1), qcl-Type2 (i.e., QCL type 2), pathlossReferenceRS-Id-r17 (i.e., a PL RS), ul-powerControl-r17 (i.e., uplink power control), and plOffset-r19 (i.e., a pathloss offset). There are two configuration manners of plOffset-r19: the first is an INTEGER configuration manner, where the value of the pathloss offset may be configured from an integer X to an integer Y; and the second is an ENUMERATED configuration manner, for example, one value is selected from four values A, B, C, and D for configuration.

The N TCI states include a first TCI state. When the first TCI state is an indicated TCI state, the PL RS associated with the first TCI state is used for the terminal device to determine the first pathloss, and the pathloss offset associated with the first TCI state is used for the terminal device to determine the first pathloss offset.

Here, for the definition of the indicated TCI state, reference may be made to the foregoing related descriptions. The NW may indicate the first TCI state by using RRC signaling, or indicate the first TCI state by using RRC signaling and a MAC CE, or indicate the first TCI state by using RRC signaling, a MAC CE and DCI. After the first TCI state is indicated by the NW, the first TCI state is the indicated TCI state. For the manner in which the NW indicates the first TCI state through signaling, reference may be made to the foregoing related descriptions. It should be noted that, for uplink transmission from the terminal device to the second network device, the NW may indicate one TCI state (i.e., the foregoing first TCI state) to the terminal device, and the terminal device sends an uplink signal and/or an uplink channel to the second network device based on the TCI state.

When the terminal device determines, through the signaling of the NW, that the first TCI state is the indicated TCI state, the terminal device may obtain the first pathloss by measuring the PL RS associated with the first TCI state, and may use the pathloss offset associated with the first TCI state as the first pathloss offset.

Solution 5

In some implementations, the NW sends first signaling to the terminal device, and the terminal device receives the first signaling. The first signaling is used to configure N TCI states, each TCI state among the N TCI states is associated with one PL RS and multiple pathloss offsets, and N is a positive integer.

In some implementations, one TCI state is configured with at most maxNrofPLOffsets pathloss offsets, and a value of maxNrofPLOffsets depends on the capability of the terminal device. The terminal device reports the supported maxNrofPLOffsets to the NW, and the number of pathloss offsets configured by the NW for each TCI state through the first signaling should be less than or equal to maxNrofPLOffsets.

Here, the type of the TCI state is a UL TCI state or a joint TCI state, and the UL TCI state or the joint TCI state is used for the terminal device to transmit an uplink signal and/or an uplink channel.

Here, the first signaling comes from the first network device (the first network device supports downlink transmission) or from another network device supporting downlink transmission. In some implementations, the first network device sends the first signaling to the terminal device.

In some implementations, the first signaling is RRC signaling. The NW configures N TCI states by using RRC signaling, and each TCI state among the N TCI states is associated with one PL RS and multiple pathloss offsets. In other words, the configuration of each TCI state among the N TCI states includes one PL RS and multiple pathloss offsets.

In some implementations, there are two configuration manners of the pathloss offset: the first is an INTEGER configuration manner, where the value of the pathloss offset may be configured from an integer X to an integer Y, for example, from -40 dB to 20 dB; and the second is an ENUMERATED configuration manner, for example, one value is selected from four values A, B, C, and D for configuration.

In an example, Table 3 below shows configuration content of a TCI state.

```
TCI-State ::=                    SEQUENCE {
    tci-StateId                      TCI-StateId,
    qcl-Type1                        QCL-Info,
    qcl-Type2                        QCL-Info          OPTIONAL,    -- Need R
    ...,
    [[
    additionalPCI-r17                AdditionalPCIIndex-r17      OPTIONAL,    -- Need R
    pathlossReferenceRS-Id-r17        PathlossReferenceRS-Id-r17    OPTIONAL,      -- Cond
JointTCI1
    ul-powerControl-r17              Uplink-powerControlId-r17    OPTIONAL      -- Cond
JointTCI
    ]]
    [[
    plOffset-r19                     SEQUENCE (SIZE (1..maxNrofPLOffsets)) OF PLOffset-Id-r19
    ]]
    }

PLOffset-r19 ::=                 SEQUENCE {
    PLOffset-Id                  PLOffset-Id-r19
    PLOffset                     INTEGER(X...Y)
    }

PLOffset-r19 ::=                 SEQUENCE {
    PLOffset-Id                  PLOffset-Id-r19
    PLOffset                     ENUMERATED(A,B,C,D)
    }
```

Table 3

As shown in Table 3, the difference between Table 3 and Table 2 is that the number of pathloss offsets configured in Table 3 may be multiple, and the number of pathloss offsets is less than or equal to maxNrofPLOffsets, so that one TCI state is associated with multiple pathloss offsets.

In some implementations, the NW sends second signaling to the terminal device, and the terminal device receives the second signaling. The second signaling is used to activate M TCI states among the N TCI states and activate one pathloss offset for each activated TCI state, where M is a positive integer less than or equal to N.

Here, the second signaling comes from the first network device (the first network device supports downlink transmission) or from another network device supporting downlink transmission. In some implementations, the first network device sends the second signaling to the terminal device.

In some implementations, the second signaling is a MAC CE. The NW activates M TCI states from the N TCI states configured by the first signaling by using the MAC CE and activates one pathloss offset for each activated TCI state.

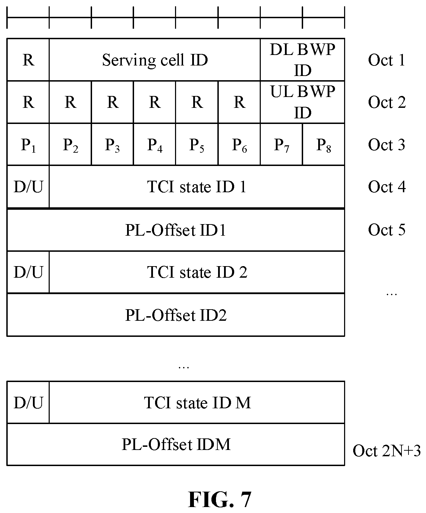

In an example, the structure of the MAC CE may refer to FIG. 7. FIG. 7 is enhanced on the basis of FIG. 2. For fields in FIG. 7 that are the same as those in FIG. 2, reference may be made to the related descriptions of FIG. 2; and only fields in FIG. 7 that are different from those in FIG. 2 are described here. As shown in FIG. 7, the MAC CE includes a pathloss offset identifier (PL-Offset ID) field in addition to a TCI state ID field. The TCI state ID field is used to indicate an activated TCI state; the PL-Offset ID field is used to indicate an activated pathloss offset corresponding to the activated TCI state. It should be noted that the length of the PL-Offset ID field is 8 bits as an example only, and may be other numbers of bits.

The difference between Solution 5 and Solution 4 is that in Solution 5, the NW configures multiple pathloss offsets for each TCI state through the first signaling, and therefore one pathloss offset needs to be activated from the multiple pathloss offsets by using the MAC CE. In Solution 4, the NW configures one pathloss offset for each TCI state through the first signaling, and therefore there is no need to activate the pathloss offset by using the MAC CE.

The M TCI states include a first TCI state. When the first TCI state is an indicated TCI state, the PL RS associated with the first TCI state is used for the terminal device to determine the first pathloss, and the activated pathloss offset associated with the first TCI state is used for the terminal device to determine the first pathloss offset.

Here, for the definition of the indicated TCI state, reference may be made to the foregoing related descriptions. The NW may indicate the first TCI state by using RRC signaling, or indicate the first TCI state by using RRC signaling and a MAC CE, or indicate the first TCI state by using RRC signaling, a MAC CE and DCI. After the first TCI state is indicated by the NW, the first TCI state is the indicated TCI state. For the manner in which the NW indicates the first TCI state through signaling, reference may be made to the foregoing related descriptions. It should be noted that, for uplink transmission from the terminal device to the second network device, the NW may indicate one TCI state (i.e., the foregoing first TCI state) to the terminal device, and the terminal device sends an uplink signal and/or an uplink channel to the second network device based on the TCI state.

When the terminal device determines, through the signaling of the NW, that the first TCI state is the indicated TCI state, the terminal device may obtain the first pathloss by measuring the PL RS associated with the first TCI state, and may use the activated pathloss offset associated with the first TCI state as the first pathloss offset.

Solution 6

In some implementations, the NW sends first signaling to the terminal device, and the terminal device receives the first signaling. The first signaling is used to configure N TCI states, each TCI state among the N TCI states is associated with multiple PL RSs and multiple pathloss offsets, and N is a positive integer.

In some implementations, one TCI state is configured with at most maxNrofPLRSperTCIState PL RSs, and a value of maxNrofPLRSperTCIState depends on the capability of the terminal device. The terminal device reports the supported maxNrofPLRSperTCIState to the NW, and the number of PL RSs configured by the NW for each TCI state through the first signaling should be less than or equal to maxNrofPLRSperTCIState.

In some implementations, one TCI state is configured with at most maxNrofPLOffsets pathloss offsets, and a value of maxNrofPLOffsets depends on the capability of the terminal device. The terminal device reports the supported maxNrofPLOffsets to the NW, and the number of pathloss offsets configured by the NW for each TCI state through the first signaling should be less than or equal to maxNrofPLOffsets.

Here, the type of the TCI state is a UL TCI state or a joint TCI state, and the UL TCI state or the joint TCI state is used for the terminal device to transmit an uplink signal and/or an uplink channel.

Here, the first signaling comes from the first network device (the first network device supports downlink transmission) or from another network device supporting downlink transmission. In some implementations, the first network device sends the first signaling to the terminal device.

In some implementations, the first signaling is RRC signaling. The NW configures N TCI states by using RRC signaling, and each TCI state among the N TCI states is associated with multiple PL RSs and multiple pathloss offsets. In other words, the configuration of each TCI state among the N TCI states includes multiple PL RSs and multiple pathloss offsets.

In some implementations, there are two configuration manners of the pathloss offset: the first is an INTEGER configuration manner, where the value of the pathloss offset may be configured from an integer X to an integer Y, for example, from -40 dB to 20 dB; and the second is an ENUMERATED configuration manner, for example, one value is selected from four values A, B, C, and D for configuration.

In an example, Table 4 below shows configuration content of a TCI state.

```
TCI-State ::=                          SEQUENCE {
    tci-StateId                            TCI-StateId,
    qcl-Type1                              QCL-Info,
    qcl-Type2                              QCL-Info          OPTIONAL,    -- Need R
    ...,
    [[
    additionalPCI-r17                      AdditionalPCIIndex-r17        OPTIONAL,    -- Need R
    pathlossReferenceRS-Id-r17              PathlossReferenceRS-Id-r17    OPTIONAL,      -- Cond
JointTCI1
    ul-powerControl-r17                    Uplink-powerControlId-r17    OPTIONAL      -- Cond
JointTCI
    ]]
    [[
    plOffset-r19                    SEQUENCE (SIZE (1..maxNrofPLOffsets)) OF PLOffset-Id-r19
    pathlossReferenceRS-Id-r19              SEQUENCE   (SIZE   (1..maxNrofPLRSperTCIState))   OF
    PathlossReferenceRS-Id-r19   OPTIONAL,     -- Cond JointTCI1
    ]]
    }


PLOffset-r19 ::=                       SEQUENCE {
    PLOffset-Id                            PLOffset-Id-r19
    PLOffset                               INTEGER(X…Y)
    }


PLOffset-r19 ::=                       SEQUENCE {
    PLOffset-Id                            PLOffset-Id-r19
    PLOffset                               ENUMERATED(A,B,C,D)
    }
```

Table 4

As shown in Table 4, the difference between Table 4 and Table 3 is that the number of PL RSs configured in Table 4 may be multiple, and the number of PL RSs is less than or equal to maxNrofPLRSperTCIState, so that one TCI state is associated with multiple PL RSs.

An advantage of configuring multiple PL RSs for each TCI state by the NW is that one PL RS may be flexibly selected from the multiple PL RSs for measurement, and the first pathloss may be obtained by measuring the PL RS. The first pathloss obtained by measuring different PL RSs is different, and the second pathloss determined based on the first pathloss is more flexible. Since the second pathloss is related to uplink power control, the flexibility of uplink power control is also improved. Generally, different PL RSs correspond to different network devices (e.g., TRPs), and the terminal device may select one PL RS from PL RSs sent by multiple network devices for measurement, so as to obtain the first pathloss.

In some implementations, the NW sends second signaling to the terminal device, and the terminal device receives the second signaling. The second signaling is used to activate M TCI states among the N TCI states and activate one PL RS and one pathloss offset for each activated TCI state, where M is a positive integer less than or equal to N.

Here, the second signaling comes from the first network device (the first network device supports downlink transmission) or from another network device supporting downlink transmission. In some implementations, the first network device sends the second signaling to the terminal device.

In some implementations, the second signaling is a MAC CE. The NW activates M TCI states from the N TCI states configured by the first signaling by using the MAC CE and activates one PL RS and one pathloss offset for each activated TCI state.

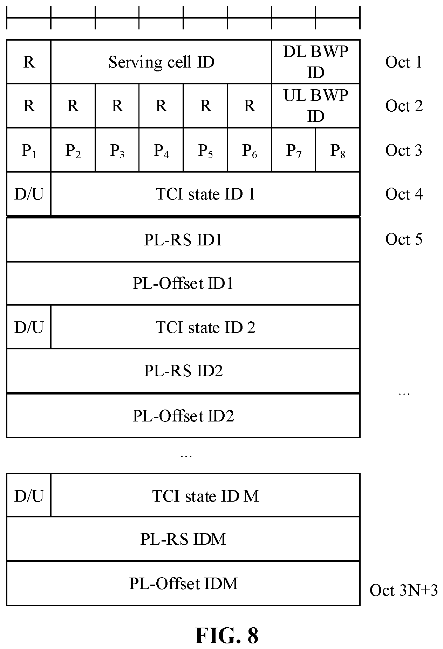

In an example, the structure of the MAC CE may refer to FIG. 8. FIG. 8 is enhanced on the basis of FIG. 7. For fields in FIG. 8 that are the same as those in FIG. 7 (i.e., fields that are the same as those in FIG. 2), reference may be made to the related descriptions of FIG. 2, and only fields in FIG. 8 that are different from those in FIG. 7 are described here. As shown in FIG. 8, the MAC CE includes a PL RS ID field, in addition to a TCI state ID field and a PL-Offset ID field. The TCI state ID field is used to indicate an activated TCI state; the PL RS ID field is used to indicate an activated PL RS corresponding to the activated TCI state; and the PL-Offset ID field is used to indicate an activated pathloss offset corresponding to the activated TCI state. It should be noted that the lengths of the PL RS ID field and the PL-Offset ID field are 8 bits as an example only, and may be other numbers of bits.

The difference between Solution 6 and Solution 5 is that in Solution 6, the NW configures multiple PL RSs for each TCI state through the first signaling, and therefore one PL RS needs to be activated from the multiple PL RSs by using the MAC CE. In Solution 5, the NW configures one PL RS for each TCI state through the first signaling, and therefore there is no need to activate the PL RS by using the MAC CE.

The M TCI states include a first TCI state. When the first TCI state is an indicated TCI state, the activated PL RS associated with the first TCI state is used for the terminal device to determine the first pathloss, and the activated pathloss offset associated with the first TCI state is used for the terminal device to determine the first pathloss offset.

Here, for the definition of the indicated TCI state, reference may be made to the foregoing related descriptions. The NW may indicate the first TCI state by using RRC signaling, or indicate the first TCI state by using RRC signaling and a MAC CE, or indicate the first TCI state by using RRC signaling, a MAC CE and DCI. After the first TCI state is indicated by the NW, the first TCI state is the indicated TCI state. For the manner in which the NW indicates the first TCI state through signaling, reference may be made to the foregoing related descriptions. It should be noted that, for uplink transmission from the terminal device to the second network device, the NW may indicate one TCI state (i.e., the foregoing first TCI state) to the terminal device, and the terminal device sends an uplink signal and/or an uplink channel to the second network device based on the TCI state.

When the terminal device determines, through the signaling of the NW, that the first TCI state is the indicated TCI state, the terminal device may obtain the first pathloss by measuring the activated PL RS associated with the first TCI state, and may use the activated pathloss offset associated with the first TCI state as the first pathloss offset.

In the following Solutions 7 to 8, a pathloss offset is associated with an indicated TCI state. Here, for the definition of the indicated TCI state, reference may be made to the foregoing related descriptions. The NW may indicate a TCI state by using RRC signaling, or indicate a TCI state by using RRC signaling and a MAC CE, or indicate a TCI state by using RRC signaling, a MAC CE and DCI (e.g., DCI format 1_1 or 1_2). After a TCI state is indicated by the NW, the TCI state is the indicated TCI state. For the manner in which the NW indicates a TCI state through signaling, reference may be made to the foregoing related descriptions. It should be noted that, for uplink transmission from the terminal device to the second network device, the NW may indicate one TCI state to the terminal device, and the terminal device sends an uplink signal and/or an uplink channel to the second network device based on the TCI state. It can be understood that the TCI state is indicated by the NW through signaling before uplink transmission, and the NW may also update the TCI state through signaling (i.e., re-indicate a TCI state).

In some implementations, the NW indicates at most K TCI states, and a value of K depends on NW implementation. For example, the maximum value of K is 2, and the NW indicates at most 2 TCI states, which are referred to as a first indicated TCI state and a second indicated TCI state. Different indicated TCI states correspond to different network devices (e.g., TRPs).

Solution 7

In some implementations, the NW sends first signaling to the terminal device, and the terminal device receives the first signaling. The first signaling is used to configure N TCI states, each TCI state among the N TCI states is associated with one PL RS, and N is a positive integer.

Here, the type of the TCI state is a UL TCI state or a joint TCI state, and the UL TCI state or the joint TCI state is used for the terminal device to transmit an uplink signal and/or an uplink channel.

Here, the first signaling comes from the first network device (the first network device supports downlink transmission) or from another network device supporting downlink transmission. In some implementations, the first network device sends the first signaling to the terminal device.

In some implementations, the first signaling is RRC signaling. The NW configures N TCI states by using RRC signaling, and each TCI state among the N TCI states is associated with one PL RS. In other words, the configuration of each TCI state among the N TCI states includes one PL RS.

In some implementations, K TCI states of the N TCI states are indicated TCI states, where K is a positive integer less than N. The NW sends third signaling to the terminal device, and the terminal device receives the third signaling. The third signaling is used to indicate pathloss offsets associated with all indicated TCI states of the K indicated TCI states or pathloss offsets associated with some indicated TCI states of the K indicated TCI states.

Here, the third signaling comes from the first network device (the first network device supports downlink transmission) or from another network device supporting downlink transmission. In some implementations, the first network device sends the third signaling to the terminal device.

In some implementations, the third signaling is a MAC CE.

For Solution 7, when the NW configures a TCI state through the first signaling (e.g., RRC signaling), only one PL RS associated with the TCI state is configured but a pathloss offset associated with the TCI state is not configured. Then, the NW may additionally indicate a pathloss offset for the indicated TCI state through second signaling (e.g., a MAC CE).

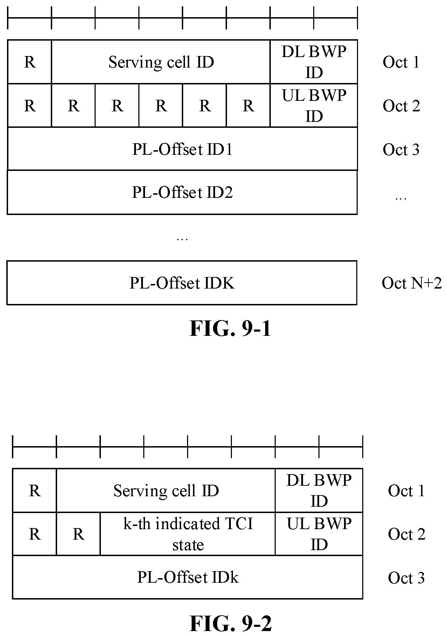

In an example, the structure of the MAC CE may refer to FIG. 9-1, including the following fields:

a Serving Cell ID field: indicating an identifier of a serving cell to which the MAC CE applies;
a DL BWP ID field: indicating an identifier of a downlink BWP to which the MAC CE applies;
a UL BWP ID field: indicating an identifier of an uplink BWP to which the MAC CE applies;
a PL-Offset ID field: indicating an identifier of a pathloss offset; and
an R field: a reserved field (i.e., reserved bits), and bits of this field are set to 0.

The PL-Offset ID field includes K PL-Offset IDs (i.e., PL-Offset ID 1, PL-Offset ID 2, ..., PL-Offset ID K), which sequentially correspond to pathloss offsets corresponding to K indicated TCI states respectively. For example, PL-Offset ID 1 corresponds to a pathloss offset corresponding to a first indicated TCI state, PL-Offset ID 2 corresponds to a pathloss offset corresponding to a second indicated TCI state, and so on, PL-Offset ID K corresponds to a pathloss offset corresponding to a K-th indicated TCI state.

In an example, a structure of the MAC CE may refer to FIG. 9-2, including the following fields:

a Serving Cell ID field: indicating an identifier of a serving cell to which the MAC CE applies;
a DL BWP ID field: indicating an identifier of a downlink BWP to which the MAC CE applies;
a UL BWP ID field: indicating an identifier of an uplink BWP to which the MAC CE applies;
a k-th indicated TCI state field: indicating a k-th indicated TCI state; and
a PL-Offset ID field: indicating an identifier of a pathloss offset corresponding to the k-th indicated TCI state.

A difference between FIG. 9-2 and FIG. 9-1 lies in that: FIG. 9-2 individually indicates a pathloss offset corresponding to a k-th indicated TCI state (1≤k≤K) among K indicated TCI states, while FIG. 9-1 indicates pathloss offsets corresponding to all indicated TCI states among the K indicated TCI states.

A first indicated TCI state among the K indicated TCI states has a corresponding relationship with a second network device. A PL RS associated with the first indicated TCI state is used for a terminal device to determine a first pathloss, and a pathloss offset associated with the first indicated TCI state is used for the terminal device to determine a first pathloss offset.

Here, different indicated TCI states correspond to different network devices, and an indicated TCI state corresponding to a network device is used for uplink transmission from the terminal device to the network device. If the first indicated TCI state has a corresponding relationship with the second network device, the first indicated TCI state is used for uplink transmission from the terminal device to the second network device. Before performing uplink transmission, the terminal device may obtain the first pathloss according to the PL RS associated with the first indicated TCI state, use the pathloss offset associated with the first indicated TCI state as the first pathloss offset, further determine a second pathloss based on the first pathloss and the first pathloss offset, and determine transmit power for the uplink transmission based on the second pathloss.

Solution 8

In some implementations, a NW sends first signaling to a terminal device, and the terminal device receives the first signaling. The first signaling is used to configure N TCI states, where N is a positive integer.

Here, the type of the TCI state is a UL TCI state or a joint TCI state, and the UL TCI state or the joint TCI state is used for the terminal device to transmit an uplink signal and/or an uplink channel.

Here, the first signaling comes from a first network device (the first network device supports downlink transmission) or from another network device supporting downlink transmission. In some implementations, the first network device sends the first signaling to the terminal device.

In some implementations, the first signaling is RRC signaling. The NW configures N TCI states by using RRC signaling.

In some implementations, K TCI states among the N TCI states are indicated TCI states, where K is a positive integer less than N. The NW sends third signaling to the terminal device, and the terminal device receives the third signaling. The third signaling is used to indicate PL RSs and pathloss offsets associated with all indicated TCI states of the K indicated TCI states or PL RSs and pathloss offsets associated with some indicated TCI states of the K indicated TCI states.

Here, the third signaling comes from the first network device (the first network device supports downlink transmission) or from another network device supporting downlink transmission. In some implementations, the first network device sends the third signaling to the terminal device.

In some implementations, the third signaling is a MAC CE.

For Solution 8, when the NW configures a TCI state through the first signaling (e.g., RRC signaling), neither a PL RS associated with the TCI state nor a pathloss offset associated with the TCI state is configured. Then, the NW may additionally indicate one PL RS and one pathloss offset for the indicated TCI state through the second signaling (e.g., a MAC CE).

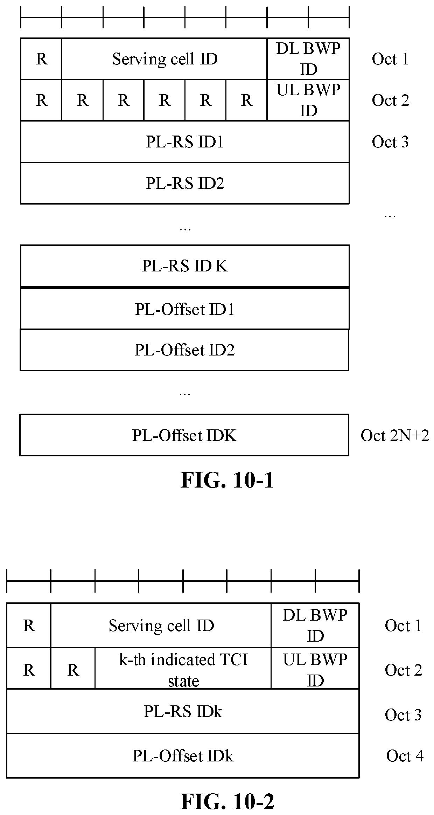

In an example, a structure of the MAC CE may refer to FIG. 10-1. FIG. 10-1 is enhanced on the basis of FIG. 9-1. For fields in FIG. 10-1 that are the same as those in FIG. 9-1, reference may be made to the related descriptions of FIG. 9-1, and only fields in FIG. 10-1 that are different from those in FIG. 9-1 are described here. As shown in FIG. 10-1, in addition to a PL-Offset ID field, the MAC CE further includes a PL RS ID field.

The PL-Offset ID field includes K PL-Offset IDs (i.e., PL-Offset ID 1, PL-Offset ID 2, ..., PL-Offset ID K), which sequentially correspond to pathloss offsets corresponding to K indicated TCI states respectively. For example, PL-Offset ID 1 corresponds to a pathloss offset corresponding to a first indicated TCI state, PL-Offset ID 2 corresponds to a pathloss offset corresponding to a second indicated TCI state, and so on, PL-Offset ID K corresponds to a pathloss offset corresponding to a K-th indicated TCI state.

The PL RS ID field includes K PL RS IDs (i.e., PL RS ID 1, PL RS ID 2, ..., PL RS ID K), which sequentially correspond to PL RSs corresponding to K indicated TCI states respectively. For example, PL RS ID 1 corresponds to a PL RS corresponding to a first indicated TCI state, PL RS ID 2 corresponds to a PL RS corresponding to a second indicated TCI state, and so on, PL RS ID K corresponds to a PL RS corresponding to a K-th indicated TCI state.

In an example, a structure of the MAC CE may refer to FIG. 10-2. FIG. 10-2 is enhanced on the basis of FIG. 9-2. For fields in FIG. 10-2 that are the same as those in FIG. 9-2, reference may be made to the related descriptions of FIG. 9-2, and only fields in FIG. 10-2 that are different from those in FIG. 9-2 are described here. As shown in FIG. 10-2, in addition to a k-th indicated TCI state field and a PL-Offset ID field, the MAC CE further includes a PL RS ID field. The k-th indicated TCI state field is used to indicate a k-th indicated TCI state, the PL-Offset ID field is used to indicate an identifier of a pathloss offset corresponding to the k-th indicated TCI state, and the PL RS ID field is used to indicate an identifier of a PL RS corresponding to the k-th indicated TCI state.

A difference between FIG. 10-2 and FIG. 10-1 lies in that: FIG. 10-2 individually indicates one PL RS and one pathloss offset corresponding to a k-th indicated TCI state ($1 \leq k \leq K$) among K indicated TCI states, while FIG. 10-1 indicates PL RSs and pathloss offsets corresponding to all of the K indicated TCI states.

A first indicated TCI state among the K indicated TCI states has a corresponding relationship with a second network device. A PL RS associated with the first indicated TCI state is used by a terminal device to determine a first pathloss, and a pathloss offset associated with the first indicated TCI state is used for the terminal device to determine a first pathloss offset.

Here, different indicated TCI states correspond to different network devices, and an indicated TCI state corresponding to a network device is used for uplink transmission from the terminal device to the network device. If the first indicated TCI state has a corresponding relationship with the second network device, the first indicated TCI state is used for uplink transmission from the terminal device to the second network device. Before performing uplink transmission, the terminal device may obtain the first pathloss according to the PL RS associated with the first indicated TCI state, use the pathloss offset associated with the first indicated TCI state as the first pathloss offset, further determine a second pathloss based on the first pathloss and the first pathloss offset, and determine transmit power for the uplink transmission based on the second pathloss.

It should be noted that the type of the TCI state described in the embodiments of the present disclosure may be a UL TCI state or a joint TCI state, and the UL TCI state or the joint TCI state is used for the terminal device to transmit an uplink signal and/or an uplink channel.

Solution 9

In some implementations, a NW sends fourth signaling to a terminal device, and the terminal device receives the fourth signaling. The fourth signaling is used to determine a first pathloss offset.

Here, the fourth signaling comes from a first network device (the first network device supports downlink transmission) or from another network device supporting downlink transmission. In some implementations, the first network device sends the fourth signaling to the terminal device.

In some implementations, the fourth signaling is DCI. The NW indicates one pathloss offset by using DCI, and the first pathloss offset may be determined according to the pathloss offset. As an implementation, the terminal device may directly use the pathloss offset indicated by the DCI as the first pathloss offset. As another implementation, the terminal device superimposes the pathloss offset indicated by the DCI onto a currently stored or last-used pathloss offset and uses the resulting pathloss offset as the first pathloss offset.

In an example, a format of the DCI is DCI format 2_2, where DCI format 2_2 is used to schedule PUCCH or PUSCH transmission. An additional pathloss offset field may be added to DCI format 2_2, and a pathloss offset corresponding to uplink transmission (i.e., PUCCH or PUSCH transmission) is indicated by the pathloss offset field.

In an example, a format of the DCI is DCI format 2_3, where DCI format 2_3 is used to schedule SRS transmission. An additional pathloss offset field may be added to DCI format 2_3, and a pathloss offset corresponding to uplink transmission (i.e., SRS transmission) is indicated by the pathloss offset field.

For example, a length of the pathloss offset field may be 1 bit, 2 bits, 3 bits, or more bits. Taking 2 bits as an example, four values of 2 bits may respectively indicate the following four pathloss offsets: {-30dB, -15dB, 0dB, 15dB}.

In some implementations, the terminal device uses the pathloss offset indicated by the DCI in the following two manners:

First manner: the terminal device directly uses the pathloss offset indicated by the DCI as the first pathloss offset; and

Second manner: the terminal device superimposes the pathloss offset indicated by the DCI onto a currently stored or last-used pathloss offset and uses the resulting pathloss offset as the first pathloss offset. For example, if the pathloss offset currently stored by the terminal device is -20dB and the pathloss offset indicated in the DCI is -10dB, the terminal device superimposes -20dB onto -10dB and uses the obtained -30dB as the first pathloss offset.

Operation 302: The terminal device determines, based on the second pathloss, transmit power of an uplink signal and/or an uplink channel sent by the terminal device to a second network device.

In some implementations, the uplink signal or the uplink channel includes at least one of the following: a PUSCH, a PUCCH, an SRS, or a PRACH. The PUSCH, PUCCH and PRACH are uplink channels, and the SRS is an uplink signal.

The transmit power of the uplink signal and/or the uplink channel may be determined based on an uplink power control formula. The uplink power control formula is described below.

Transmit power of the PUSCH is calculated by using the following Formula (5):

$$P_{\text{PUSCH,b,f,c}}(i, j, q_d, l) =$$

$$\min \begin{cases} P_{\text{CMAX,f,c}}(i), \\ P_{\text{O\_PUSCH,b,f,c}}(j) + 10 \log_{10}( 2^{\mu} \cdot M_{\text{RB,b,f,c}}^{\text{PUSCH}}(i)) + \alpha_{\text{b,f,c}}(j) \cdot (PL_{\text{b,f,c}}(q_d) + PL_{\text{offset}}(q_d)) + \Delta_{\text{TF,b,f,c}}(i) \\ \qquad + f_{\text{b,f,c}}(i, l) \end{cases}$$

$$[\text{dBm}] \quad (5)$$

Formula (5) is enhanced on the basis of the foregoing Formula (1). For parameters in Formula (5) that are the same as those in Formula (1), reference may be made to the related descriptions of Formula (1), and only parameters in Formula (5) that are different from those in Formula (1) are described here. A parameter PLoffset($q_d$) is added to Formula (5), which represents the foregoing first pathloss offset. In addition, $PL_{\text{b,f,c}}(q_d)$ represents the foregoing first pathloss, and $PL_{\text{b,f,c}}(q_d) + PL_{\text{offset}}(q_d)$ represents the foregoing second pathloss.

Transmit power of the PUCCH is calculated by using the following Formula (6):

$$P_{\text{PUCCH,b,f,c}}(i, q_u, q_d, l) =$$

$$\min \begin{cases} P_{\text{CMAX,f,c}}(i), \\ P_{\text{O\_PUCCH,b,f,c}}(q_u) + 10 \log_{10}( 2^{\mu} \cdot M_{\text{RB,b,f,c}}^{\text{PUCCH}}(i)) + (PL_{\text{b,f,c}}(q_d) + PL_{\text{offset}}(q_d)) + \Delta_{\text{F\_PUCCH}}(F) \\ \qquad + \Delta_{\text{TF,b,f,c}}(i) + g_{\text{b,f,c}}(i, l) \end{cases}$$

$$[\text{dBm}] \quad (6)$$

Formula (6) is enhanced on the basis of the foregoing Formula (2). For parameters in Formula (6) that are the same as those in Formula (2), reference may be made to the related descriptions of Formula (2), and only parameters in Formula (6) that are different from those in Formula (2) are described here. A parameter PLoffset($q_d$) is added to Formula (6), which represents the foregoing first pathloss offset. In addition, $PL_{\text{b,f,c}}(q_d)$ represents the foregoing first pathloss, and $PL_{\text{b,f,c}}(q_d) + PL_{\text{offset}}(q_d)$ represents the foregoing second pathloss.

Transmit power of the SRS is calculated by using the following Formula (7):

$$P_{SRS,b,f,c}(i, q_s, l) =$$

$$\min \begin{cases} P_{CMAX,f,c}(i), \\ P_{O\_SRS,b,f,c}(q_s) + 10 \log_{10}(2^\mu \cdot M_{SRS,b,f,c}(i)) + \alpha_{SRS,b,f,c}(q_s) \cdot (PL_{b,f,c}(q_d) + PL_{offset}(q_d)) + h_{b,f,c} \end{cases}$$

$$[dBm] \quad (7)$$

Formula (7) is enhanced on the basis of the foregoing Formula (3). For parameters in Formula (7) that are the same as those in Formula (3), reference may be made to the related descriptions of Formula (3), and only parameters in Formula (7) that are different from those in Formula (3) are described here. A parameter $PL_{offset}(q_d)$ is added to Formula (7), which represents the foregoing first pathloss offset. In addition, $PL_{b,f,c}(q_d)$ represents the foregoing first pathloss, and $PL_{b,f,c}(q_d)+PL_{offset}(q_d)$ represents the foregoing second pathloss.

Transmit power of the PRACH is calculated by using the following Formula (8):

$$P_{PRACH,b,f,c}(i)=\min\{P_{CMAX,f,c}(i),P_{PRACH,target,f,c}+PL_{b,f,c}+PL_{offset,b,f,c}\}[dBm] \quad (8)$$

Formula (8) is enhanced on the basis of the foregoing Formula (4). For parameters in Formula (8) that are the same as those in Formula (4), reference may be made to the related descriptions of Formula (4), and only parameters in Formula (8) that are different from those in Formula (4) are described here. A parameter $PL_{offset,b,f,c}$ is added to Formula (8), which represents the foregoing first pathloss offset. In addition, $PL_{b,f,c}$ represents the foregoing first pathloss, and $L_{b,f,c}$ $+PL_{offset,b,f,c}$ represents the foregoing second pathloss.

After determining the transmit power of the uplink signal and/or the uplink channel based on the foregoing Formulas (5) to (8), the terminal device may send the uplink signal and/or the uplink channel to the second network device according to the transmit power, so as to implement uplink power control of the terminal device for the second network device.

The technical solutions of the embodiments of the present disclosure are illustrated below with reference to specific application examples.

Application Example 1

This application example corresponds to the foregoing Solution 5, and related descriptions in the foregoing Solution 5 may be arbitrarily combined with this application example.

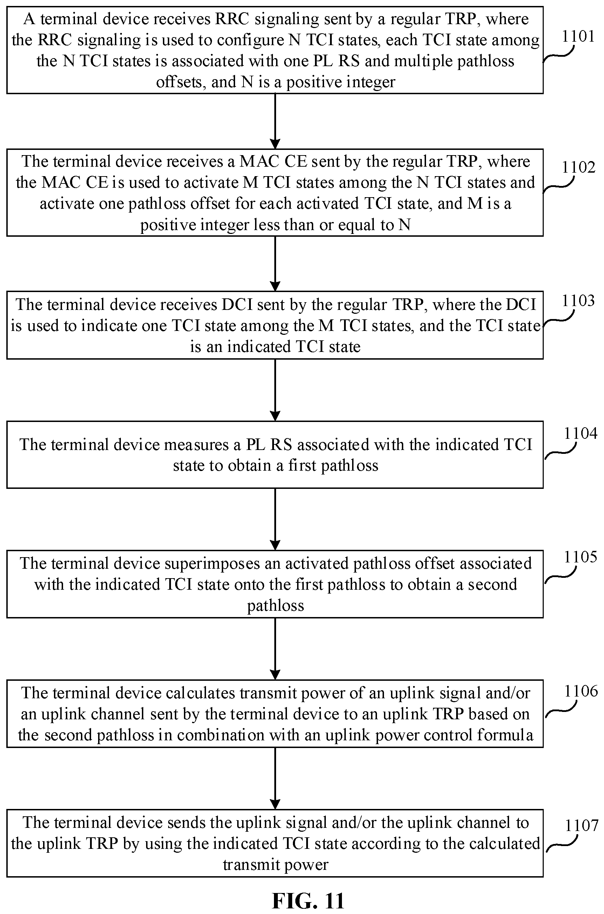

FIG. 11 is a second schematic flowchart of a power control method provided by an embodiment of the present disclosure. As shown in FIG. 11, the power control method includes at least part of the following content:

Operation 1101: A terminal device receives RRC signaling sent by a regular TRP, where the RRC signaling is used to configure N TCI states, each TCI state among the N TCI states is associated with one PL RS and multiple pathloss offsets, and N is a positive integer;

Operation 1102: The terminal device receives a MAC CE sent by the regular TRP, where the MAC CE is used to activate M TCI states among the N TCI states and activate one pathloss offset for each activated TCI state, and M is a positive integer less than or equal to N;

Operation 1103: The terminal device receives DCI sent by the regular TRP, where the DCI is used to indicate one TCI state among the M TCI states, and the TCI state is an indicated TCI state;

Operation 1104: The terminal device measures a PL RS associated with the indicated TCI state to obtain a first pathloss;

Operation 1105: The terminal device superimposes an activated pathloss offset associated with the indicated TCI state onto the first pathloss to obtain a second pathloss;

Operation 1106: The terminal device calculates transmit power of an uplink signal and/or an uplink channel sent by the terminal device to an uplink TRP based on the second pathloss in combination with an uplink power control formula; and

Operation 1107: The terminal device sends the uplink signal and/or the uplink channel to the uplink TRP by using the indicated TCI state according to the calculated transmit power.

Application Example 2

This application example corresponds to the foregoing Solution 6, and related descriptions in the foregoing Solution 6 may be arbitrarily combined with this application example.

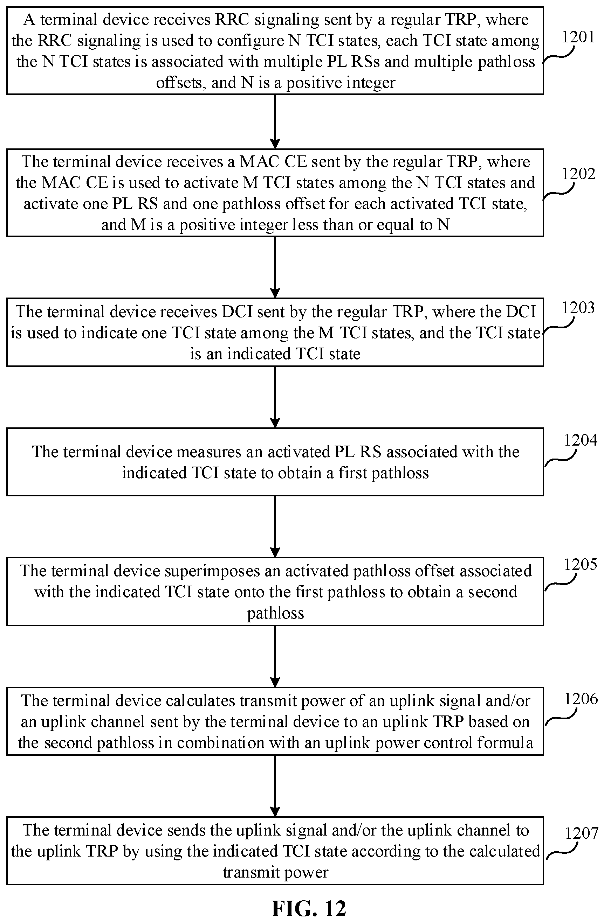

FIG. 12 is a third schematic flowchart of a power control method provided by an embodiment of the present disclosure. As shown in FIG. 12, the power control method includes at least part of the following content:

Operation 1201: A terminal device receives RRC signaling sent by a regular TRP, where the RRC signaling is used to configure N TCI states, each TCI state among the N TCI states is associated with multiple PL RSs and multiple pathloss offsets, and N is a positive integer;

Operation 1202: The terminal device receives a MAC CE sent by the regular TRP, where the MAC CE is used to activate M TCI states among the N TCI states and activate one PL RS and one pathloss offset for each activated TCI state, and M is a positive integer less than or equal to N;

Operation 1203: The terminal device receives DCI sent by the regular TRP, where the DCI is used to indicate one TCI state among the M TCI states, and the TCI state is an indicated TCI state;

Operation 1204: The terminal device measures an activated PL RS associated with the indicated TCI state to obtain a first pathloss;

Operation 1205: The terminal device superimposes an activated pathloss offset associated with the indicated TCI state onto the first pathloss to obtain a second pathloss;

Operation 1206: The terminal device calculates transmit power of an uplink signal and/or an uplink channel sent by the terminal device to an uplink TRP based on the second pathloss in combination with an uplink power control formula; and

Operation 1207: The terminal device sends the uplink signal and/or the uplink channel to the uplink TRP by using the indicated TCI state according to the calculated transmit power.

Application Example 3

This application example corresponds to the foregoing Solution 7, and related descriptions in the foregoing Solution 7 may be arbitrarily combined with this application example.

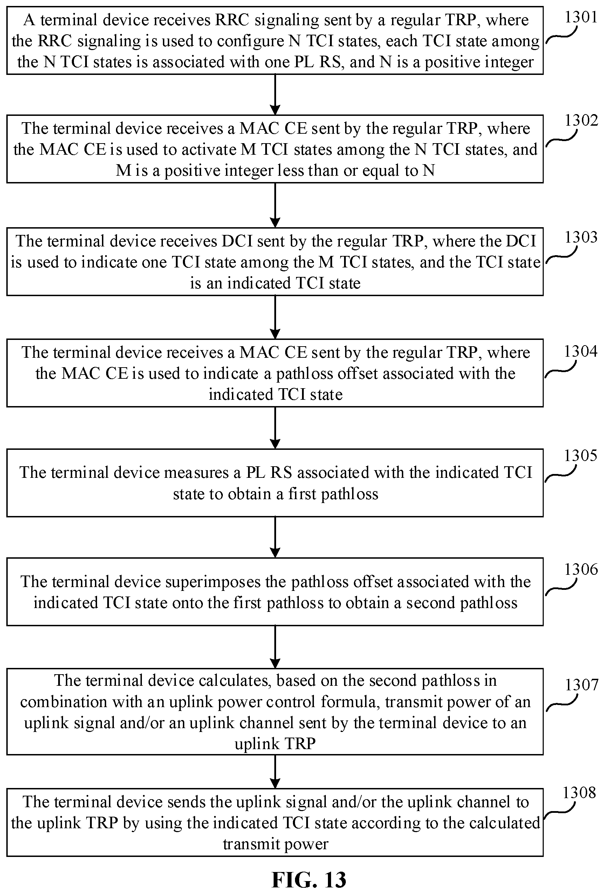

FIG. 13 is a fourth schematic flowchart of a power control method provided by an embodiment of the present disclosure. As shown in FIG. 13, the power control method includes at least part of the following content:

Operation 1301: A terminal device receives RRC signaling sent by a regular TRP, where the RRC signaling is used to configure N TCI states, each TCI state among the N TCI states is associated with one PL RS, and N is a positive integer;

Operation 1302: The terminal device receives a MAC CE sent by the regular TRP, where the MAC CE is used to activate M TCI states among the N TCI states, and M is a positive integer less than or equal to N;

Operation 1303: The terminal device receives DCI sent by the regular TRP, where the DCI is used to indicate one TCI state among the M TCI states, and the TCI state is an indicated TCI state;

Operation 1304: The terminal device receives a MAC CE sent by the regular TRP, where the MAC CE is used to indicate a pathloss offset associated with the indicated TCI state;

Operation 1305: The terminal device measures a PL RS associated with the indicated TCI state to obtain a first pathloss;

Operation 1306: The terminal device superimposes the pathloss offset associated with the indicated TCI state onto the first pathloss to obtain a second pathloss;

Operation 1307: The terminal device calculates, based on the second pathloss in combination with an uplink power control formula, transmit power of an uplink signal and/or an uplink channel sent by the terminal device to an uplink TRP; and

Operation 1308: The terminal device sends the uplink signal and/or the uplink channel to the uplink TRP by using the indicated TCI state according to the calculated transmit power.

Application Example 4

This application example corresponds to the foregoing Solution 8, and related descriptions in the foregoing Solution 8 may be arbitrarily combined with this application example.

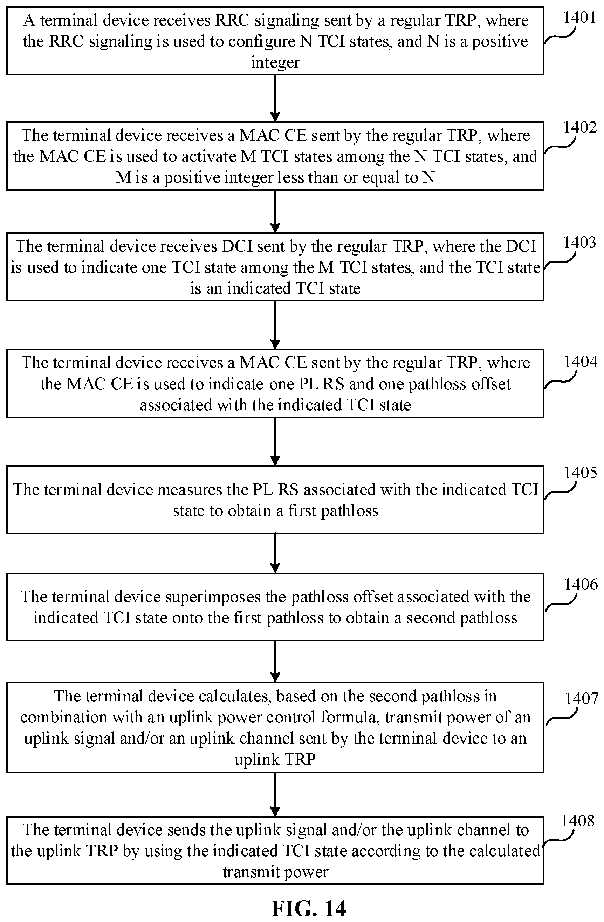

FIG. 14 is a fifth schematic flowchart of a power control method provided by an embodiment of the present disclosure. As shown in FIG. 14, the power control method includes at least part of the following content:

Operation 1401: A terminal device receives RRC signaling sent by a regular TRP, where the RRC signaling is used to configure N TCI states, and N is a positive integer;

Operation 1402: The terminal device receives a MAC CE sent by the regular TRP, where the MAC CE is used to activate M TCI states among the N TCI states, and M is a positive integer less than or equal to N;

Operation 1403: The terminal device receives DCI sent by the regular TRP, where the DCI is used to indicate one TCI state among the M TCI states, and the TCI state is an indicated TCI state;

Operation 1404: The terminal device receives a MAC CE sent by the regular TRP, where the MAC CE is used to indicate one PL RS and one pathloss offset associated with the indicated TCI state;

Operation 1405: The terminal device measures the PL RS associated with the indicated TCI state to obtain a first pathloss;

Operation 1406: The terminal device superimposes the pathloss offset associated with the indicated TCI state onto the first pathloss to obtain a second pathloss;

Operation 1407: The terminal device calculates, based on the second pathloss in combination with an uplink power control formula, transmit power of an uplink signal and/or an uplink channel sent by the terminal device to an uplink TRP; and

Operation 1408: The terminal device sends the uplink signal and/or the uplink channel to the uplink TRP by using the indicated TCI state according to the calculated transmit power.

The preferred embodiments of the present disclosure are described in detail above with reference to the accompanying drawings. However, the present disclosure is not limited to the specific details in the foregoing embodiments. Within the scope of the technical concept of the present disclosure, various simple modifications may be made to the technical solutions of the present disclosure, and these simple modifications all fall within the protection scope of the present disclosure. For example, various specific technical features described in the foregoing specific embodiments may be combined in any suitable manner without contradiction. In order to avoid unnecessary repetition, the present disclosure does not separately describe various possible combinations. For another example, various different embodiments of the present disclosure may also be combined arbitrarily, and as long as they do not violate the idea of the present disclosure, they shall also be regarded as content described by the present disclosure. For another example, on the premise that no conflict occurs, each embodiment described in the present disclosure and/or technical features in each embodiment may be arbitrarily combined with the prior art, and a technical solution obtained after combination shall also fall within the protection scope of the present disclosure.

It should also be understood that, in various method embodiments of the present disclosure, the sequence numbers of the foregoing processes do not mean the execution sequence, and the execution sequence of each process shall be determined by its function and internal logic, and shall not constitute any limitation on the implementation process of the embodiments of the present disclosure. In addition, in the embodiments of the present disclosure, the terms "downlink", "uplink" and "sidelink" are used to indicate transmission directions of signals or data, where "downlink" is used to indicate that a transmission direction of a signal or data is a first direction from a station to user equipment in a cell, "uplink" is used to indicate that a transmission direction of a signal or data is a second direction from user equipment in a cell to a station, and "sidelink" is used to indicate that a transmission direction of a signal or data is a third direction from user equipment 1 to user equipment 2. For example, a "downlink signal" indicates that a transmission direction of the signal is the first direction. In addition, in the embodiments of the present disclosure, the term "and/or" is only an association relationship for describing associated objects and represents that three relationships may exist. Specifically, A and/or B may represent: A exists alone, A and B exist simultaneously, and B exists alone. In addition, the character "/" herein generally indicates that the associated objects are in an "or" relationship.

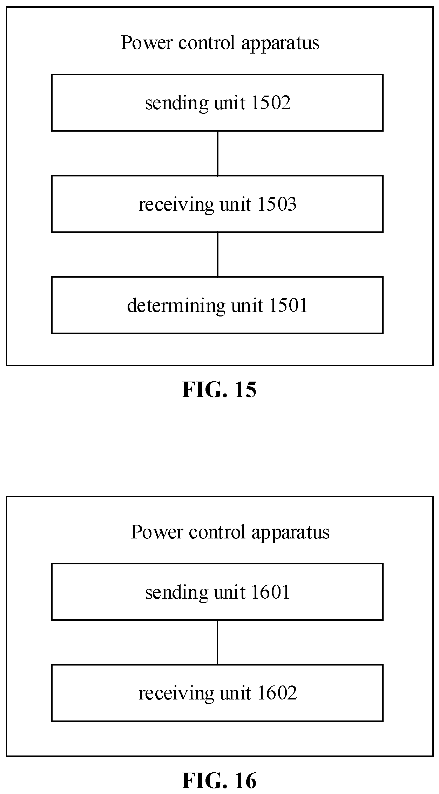

FIG. 15 is a first structural composition schematic diagram of a power control apparatus provided by an embodiment of the present disclosure, which is applied to a terminal device. As shown in FIG. 15, the power control apparatus includes:

a determining unit 1501, configured to: determine a second pathloss based on a first pathloss and a first pathloss offset, where the first pathloss is a pathloss between the terminal device and a first network device, and the second pathloss is a pathloss between the terminal device and a second network device; and determine, based on the second pathloss, transmit power of an uplink signal and/or an uplink channel sent by the terminal device to the second network device.

In some implementations, the power control apparatus may further include: a sending unit 1502.

In some implementations, the sending unit 1502 is configured to send an uplink reference signal to the first network device and the second network device, where the first pathloss offset is determined based on first received power and second received power, the first received power is received power corresponding to reception of the uplink reference signal by the first network device, and the second received power is received power corresponding to reception of the uplink reference signal by the second network device.

In some implementations, the sending unit 1502 is configured to send a first uplink reference signal to the first network device and send a second uplink reference signal to the second network device, where the first pathloss offset is determined based on first received power and second received power, the first received power is received power corresponding to reception of the first uplink reference signal by the first network device, and the second received power is received power corresponding to reception of the second uplink reference signal by the second network device. Transmit power of the second uplink reference signal is the same as transmit power of the first uplink reference signal.

In some implementations, the sending unit 1502 is configured to send a first uplink reference signal to the first network device and send a second uplink reference signal to the second network device, where the first pathloss offset is determined based on first transmit power, second transmit power, first received power and second received power, the first transmit power is transmit power of the first uplink reference signal, the second transmit power is transmit power of the second uplink reference signal, the first received power is received power corresponding to reception of the first uplink reference signal by the first network device, and the second received power is received power corresponding to reception of the second uplink reference signal by the second network device. The transmit power of the second uplink reference signal is determined based on the transmit power of the first uplink reference signal and a first power offset.

In some implementations, the first power offset is predefined or network-configured.

In some implementations, the power control apparatus may further include: a receiving unit 1503.

In some implementations, the receiving unit 1503 is configured to receive first signaling, where the first signaling is used to configure N TCI states, each TCI state among the N TCI states is associated with one PL RS and one pathloss offset, and N is a positive integer.

In some implementations, the N TCI states include a first TCI state, and when the first TCI state is an indicated TCI state, a PL RS associated with the first TCI state is used for the terminal device to determine the first pathloss, and a pathloss offset associated with the first TCI state is used for the terminal device to determine the first pathloss offset.

In some implementations, the receiving unit 1503 is configured to receive first signaling, where the first signaling is used to configure N TCI states, each TCI state among the N TCI states is associated with one PL RS and multiple pathloss offsets, and N is a positive integer.

In some implementations, the receiving unit 1503 is configured to receive second signaling, where the second signaling is used to activate M TCI states among the N TCI states and activate one pathloss offset for each activated TCI state, and M is a positive integer less than or equal to N.

In some implementations, the M TCI states include a first TCI state, and when the first TCI state is an indicated TCI state, a PL RS associated with the first TCI state is used for the terminal device to determine the first pathloss, and an activated pathloss offset associated with the first TCI state is used for the terminal device to determine the first pathloss offset.

In some implementations, the receiving unit 1503 is configured to receive first signaling, where the first signaling is used to configure N TCI states, each TCI state among the N TCI states is associated with multiple PL RSs and multiple pathloss offsets, and N is a positive integer.

In some implementations, the receiving unit 1503 is configured to receive second signaling, where the second signaling is used to activate M TCI states among the N TCI states and activate one PL RS and one pathloss offset for each activated TCI state, and M is a positive integer less than or equal to N.

In some implementations, the M TCI states include a first TCI state, and when the first TCI state is an indicated TCI state, an activated PL RS associated with the first TCI state is used for the terminal device to determine the first pathloss, and an activated pathloss offset associated with the first TCI state is used for the terminal device to determine the first pathloss offset.

In some implementations, the receiving unit 1503 is configured to receive first signaling, where the first signaling is used to configure N TCI states, each TCI state among the N TCI states is associated with one PL RS, and N is a positive integer.

In some implementations, K TCI states among the N TCI states are indicated TCI states, and K is a positive integer less than N; the receiving unit 1503 is configured to receive third signaling, where the third signaling is used to indicate pathloss offsets associated with all of the K indicated TCI states or pathloss offsets associated with part of the K indicated TCI states.

In some implementations, the receiving unit 1503 is configured to receive first signaling, where the first signaling is used to configure N TCI states, and N is a positive integer.

In some implementations, K TCI states among the N TCI states are indicated TCI states, and K is a positive integer less than N; the receiving unit 1503 is configured to receive third signaling, where the third signaling is used to indicate PL RSs and pathloss offsets associated with all of the K indicated TCI states or PL RSs and pathloss offsets associated with part of the K indicated TCI states.

In some implementations, a first indicated TCI state among the K indicated TCI states has a corresponding relationship with the second network device, a PL RS associated with the first indicated TCI state is used for the terminal device to determine the first pathloss, and a pathloss offset associated with the first indicated TCI state is used for the terminal device to determine the first pathloss offset.

In some implementations, the receiving unit 1503 is configured to receive fourth signaling, where the fourth signaling is used to determine the first pathloss offset.

A person skilled in the art should understand that the relevant description of the power control apparatus in the embodiments of the present disclosure may be understood with reference to the relevant description of the power control methods in the embodiments of the present disclosure.

FIG. 16 is a second structural composition schematic diagram of a power control apparatus provided by an embodiment of the present disclosure, which is applied to a network device (such as the foregoing first network device). As shown in FIG. 16, the power control apparatus includes:

a sending unit 1601, configured to: send signaling to a terminal device, where the signaling is used to determine a first pathloss offset, the first pathloss offset and a first pathloss are used for the terminal device to determine a second pathloss, the first pathloss is a pathloss between the terminal device and the first network device, and the second pathloss is a pathloss between the terminal device and a second network device, and the second pathloss is used for the terminal device to determine transmit power of an uplink signal and/or an uplink channel sent to the second network device.

In some implementations, the apparatus may further include: a receiving unit 1602.

In some implementations, the receiving unit 1602 is configured to receive an uplink reference signal sent by the terminal device, where the first pathloss offset is determined based on first received power and second received power, the first received power is received power corresponding to reception of the uplink reference signal by the first network device, and the second received power is received power corresponding to reception of the uplink reference signal by the second network device.

In some implementations, the receiving unit 1602 is configured to receive a first uplink reference signal sent by the terminal device, where the first pathloss offset is determined based on first received power and second received power, the first received power is received power corresponding to reception of the first uplink reference signal by the first network device, and the second received power is received power corresponding to reception of the second uplink reference signal by the second network device. In some implementations, transmit power of the second uplink reference signal is the same as transmit power of the first uplink reference signal.

In some implementations, the receiving unit 1602 is configured to receive a first uplink reference signal sent by the terminal device, where the first pathloss offset is determined based on first transmit power, second transmit power, first received power and second received power, the first transmit power is transmit power of the first uplink reference signal, the second transmit power is transmit power of a second uplink reference signal sent by the terminal device, the first received power is received power corresponding to reception of the first uplink reference signal by the first network device, and the second received power is received power corresponding to reception of the second uplink reference signal by the second network device. In some implementations, the transmit power of the second uplink reference signal is determined based on the transmit power of the first uplink reference signal and a first power offset. In some implementations, the first power offset is predefined or network-configured.

In some implementations, the sending unit 1601 is configured to send first signaling to a terminal device, where the first signaling is used to configure N TCI states, each TCI state among the N TCI states is associated with one PL RS and one pathloss offset, and N is a positive integer.

In some implementations, the N TCI states include a first TCI state, and when the first TCI state is an indicated TCI state, a PL RS associated with the first TCI state is used for the terminal device to determine the first pathloss, and a pathloss offset associated with the first TCI state is used for the terminal device to determine the first pathloss offset.

In some implementations, the sending unit 1601 is configured to send first signaling and second signaling to a terminal device, where the first signaling is used to configure N TCI states, each TCI state among the N TCI states is associated with one PL RS and multiple pathloss offsets, and N is a positive integer; and the second signaling is used to activate M TCI states among the N TCI states and activate one pathloss offset for each activated TCI state, and M is a positive integer less than or equal to N.

In some implementations, the M TCI states include a first TCI state, and when the first TCI state is an indicated TCI state, a PL RS associated with the first TCI state is used for the terminal device to determine the first pathloss, and an activated pathloss offset associated with the first TCI state is used for the terminal device to determine the first pathloss offset.

In some implementations, the sending unit 1601 is configured to send first signaling and second signaling to a terminal device, where the first signaling is used to configure N TCI states, each TCI state among the N TCI states being associated with multiple PL RSs and multiple pathloss offsets, and N is a positive integer, and the second signaling is used to activate M TCI states among the N TCI states and activate one PL RS and one pathloss offset for each activated TCI state, M being a positive integer less than or equal to N.

In some implementations, the M TCI states include a first TCI state, and when the first TCI state is an indicated TCI state, an activated PL RS associated with the first TCI state is used for the terminal device to determine the first pathloss, and an activated pathloss offset associated with the first TCI state is used for the terminal device to determine the first pathloss offset.

In some implementations, the sending unit 1601 is configured to send first signaling and third signaling to a terminal device, where the first signaling is used to configure N TCI states, each TCI state among the N TCI states is associated with one PL RS, and N is a positive integer; K TCI states among the N TCI states are indicated TCI states, and K is a positive integer less than N; and the third signaling is used to indicate pathloss offsets associated with all of the K indicated TCI states or pathloss offsets associated with part of the K indicated TCI states.

In some implementations, the sending unit 1601 is configured to send first signaling and third signaling to a terminal device, where the first signaling is used to configure N TCI states, and N is a positive integer; K TCI states among the N TCI states are indicated TCI states, and K is a positive integer less than N; and the third signaling is used to indicate PL RSs and pathloss offsets associated with all of the K indicated TCI states or PL RSs and pathloss offsets associated with part of the K indicated TCI states.

In some implementations, a first indicated TCI state among the K indicated TCI states has a corresponding relationship with the second network device, a PL RS associated with the first indicated TCI state is used for the terminal device to determine the first pathloss, and a pathloss offset associated with the first indicated TCI state is used for the terminal device to determine the first pathloss offset.

In some implementations, the sending unit 1601 is configured to send fourth signaling to a terminal device, where the fourth signaling is used to determine the first pathloss offset.

A person skilled in the art should understand that the relevant description of the foregoing power control apparatus in the embodiments of the present disclosure may be understood with reference to the relevant description of the power control methods in the embodiments of the present disclosure.

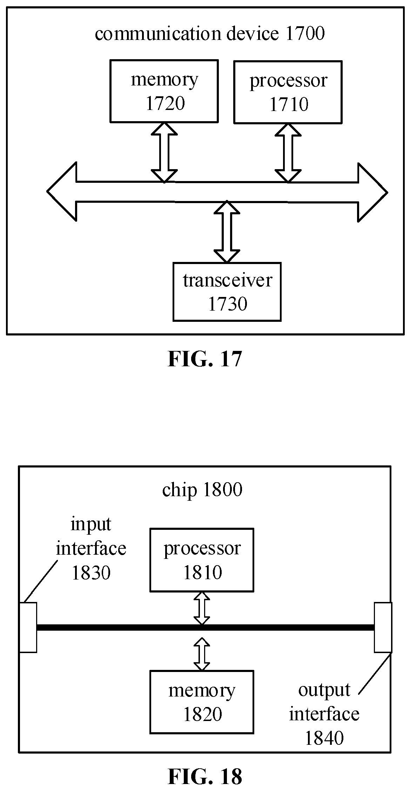

FIG. 17 is a schematic structural diagram of a communication device 1700 according to an embodiment of the present disclosure. The communication device may be a terminal device or a network device (such as the foregoing first network device). The communication device 1700 shown in FIG. 17 includes a processor 1710, and the processor 1710 may call and run a computer program from a memory to implement the method in the embodiments of the present disclosure.

Optionally, as shown in FIG. 17, the communication device 1700 may further include a memory 1720. The processor 1710 may call and run a computer program from the memory 1720 to implement the method in the embodiments of the present disclosure.

The memory 1720 may be a separate device independent of the processor 1710, or may be integrated in the processor 1710.

Optionally, as shown in FIG. 17, the communication device 1700 may further include a transceiver 1730, and the processor 1710 may control the transceiver 1730 to communicate with other devices, and specifically, may send information or data to other devices or receive information or data sent by other devices.

The transceiver 1730 may include a transmitter and a receiver. The transceiver 1730 may further include antennas, and the number of antennas may be one or more.

In some implementations, the communication device 1700 may specifically be a terminal device in the embodiments of the present disclosure, and the communication device 1700 may implement corresponding processes implemented by the terminal device in various methods in the embodiments of the present disclosure. For brevity, details are not described herein again.

In some implementations, the communication device 1700 may specifically be a network device (such as the foregoing first network device) in the embodiments of the present disclosure, and the communication device 1700 may implement corresponding processes implemented by a NW in various methods in the embodiments of the present disclosure. For brevity, details are not described herein again.

FIG. 18 is a schematic structural diagram of a chip according to an embodiment of the present disclosure. The chip 1800 shown in FIG. 18 includes a processor 1810, and the processor 1810 may call and run a computer program from a memory to implement the method in the embodiments of the present disclosure.

Optionally, as shown in FIG. 18, the chip 1800 may further include a memory 1820. The processor 1810 may call and run a computer program from the memory 1820 to implement the method in the embodiments of the present disclosure.

The memory 1820 may be a separate device independent of the processor 1810, or may be integrated in the processor 1810.

Optionally, the chip 1800 may further include an input interface 1830. The processor 1810 may control the input interface 1830 to communicate with other devices or chips, and specifically, may obtain information or data sent by other devices or chips.

Optionally, the chip 1800 may further include an output interface 1840. The processor 1810 may control the output interface 1840 to communicate with other devices or chips, and specifically, may output information or data to other devices or chips.

In some implementations, the chip may be applied to a terminal device in the embodiments of the present disclosure, and the chip may implement corresponding processes implemented by the terminal device in various methods in the embodiments of the present disclosure. For brevity, details are not described herein again.

In some implementations, the chip may be applied to a network device (such as the foregoing first network device) in the embodiments of the present disclosure, and the chip may implement corresponding processes implemented by a NW in various methods in the embodiments of the present disclosure. For brevity, details are not described herein again.

It should be understood that the chip mentioned in the embodiments of the present disclosure may also be referred to as a system-level chip, a system chip, a chip system, a system on chip, or the like.

It should be understood that the processor in the embodiments of the present disclosure may be an integrated circuit chip having a signal processing capability. In an implementation process, the operations in the foregoing method embodiments may be implemented by using a hardware integrated logic circuit in the processor or instructions in a form of software. The foregoing processor may be a general-purpose processor, a digital signal processor (DSP), an application specific integrated circuit (ASIC), a field programmable gate array (FPGA) or another programmable logic device, a discrete gate or transistor logic device, or a discrete hardware component, which may implement or execute the methods, operations, and logic block diagrams described in the embodiments of the present disclosure. The general-purpose processor may be a microprocessor or the processor may be any conventional processor or the like. The operations of the methods described with reference to the embodiments of the present disclosure may be directly implemented by a hardware decoding processor, or may be implemented by using a combination of hardware and software modules in a decoding processor. The software module may be located in a mature storage medium in the art such as a random access memory, a flash memory, a read-only memory, a programmable read-only memory, an electrically erasable programmable memory, or a register. The storage medium is located in a memory, and the processor reads information in the memory and completes the operations of the foregoing methods in combination with hardware of the processor.

It may be understood that the memory in the embodiments of the present disclosure may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memory of the systems and methods described in the present disclosure is intended to include, but is not limited to, these and any other suitable types of memories.

It should be understood that the foregoing memory is exemplary and not restrictive. For example, the memory in the embodiments of the present disclosure may alternatively be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), or the like. That is, the memory in the embodiments of the present disclosure is intended to include, but is not limited to, these and any other suitable types of memories.

Embodiments of the present disclosure further provide a computer-readable storage medium, configured to store a computer program.

In some implementations, the computer-readable storage medium may be applied to a terminal device in the embodiments of the present disclosure, and the computer program enables a computer to execute corresponding processes implemented by the terminal device in various methods in the embodiments of the present disclosure. For brevity, details are not described herein again.

In some implementations, the computer-readable storage medium may be applied to a network device (such as the foregoing first network device) in the embodiments of the present disclosure, and the computer program enables a computer to execute corresponding processes implemented by a NW in various methods in the embodiments of the present disclosure. For brevity, details are not described herein again.

Embodiments of the present disclosure further provide a computer program product including computer program instructions.

In some implementations, the computer program product may be applied to a terminal device in the embodiments of the present disclosure, and the computer program instructions enable a computer to execute corresponding processes implemented by the terminal device in various methods in the embodiments of the present disclosure. For brevity, details are not described herein again.

In some implementations, the computer program product may be applied to a network device (such as the foregoing first network device) in the embodiments of the present disclosure, and the computer program instructions enable a computer to execute corresponding processes implemented by a NW in various methods in the embodiments of the present disclosure. For brevity, details are not described herein again.

Embodiments of the present disclosure further provide a computer program.

In some implementations, the computer program may be applied to a terminal device in the embodiments of the present disclosure, and when the computer program runs on a computer, the computer is enabled to execute corresponding processes implemented by the terminal device in various methods in the embodiments of the present disclosure. For brevity, details are not described herein again.

In some implementations, the computer program may be applied to a network device (such as the foregoing first network device) in the embodiments of the present disclosure, and when the computer program runs on a computer, the computer is enabled to execute corresponding processes implemented by a NW in various methods in the embodiments of the present disclosure. For brevity, details are not described herein again.

A person skilled in the art may understand that the units and algorithm steps of the examples described with reference to the embodiments described herein may be implemented by electronic hardware, or a combination of computer software and electronic hardware. Whether the functions are performed by hardware or software depends on the particular application and design constraint conditions of the technical solutions. A person skilled in the art may use different methods to implement the described functions for each particular application, but such implementation shall not be considered to go beyond the scope of the present disclosure.

A person skilled in the art may clearly understand that, for the convenience and brevity of description, reference may be made to corresponding processes in the foregoing method embodiments for the specific working processes of the foregoing described systems, apparatuses and units, and details are not described herein again.

In the several embodiments provided in the present disclosure, it should be understood that the described system, apparatuses and methods may be implemented in other manners. For example, the apparatus embodiments described above are merely illustrative. For example, the division of the units is only logical function division, and there may be another division manner during actual implementation. For example, multiple units or components may be combined or may be integrated into another system, or some features may be ignored or not performed. In addition, the displayed or discussed mutual coupling or direct coupling or communication connection may be indirect coupling or communication connection through some interfaces, apparatuses or units, and may be in an electrical, mechanical or other form.

The units described as separate components may or may not be physically separated, and the components displayed as units may or may not be physical units, that is, may be located in one place, or may be distributed to multiple network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions essentially contributing to the prior art, or the part contributing to the prior art in the the technical solutions, or some of the technical solutions may be implemented in a form of a software product. The computer software product is stored in a storage medium, and includes several instructions for enabling a computer device (which may be a personal computer, a server, a network device, or the like) to perform all or part of the operations of the methods in the embodiments. The foregoing storage medium includes: any medium that can store program code, such as a USB flash drive, a removable hard disk, a read-only memory (ROM), a random access memory (RAM), a magnetic disk, or an optical disc.

The above descriptions are merely specific implementations of the present disclosure, but the protection scope of the present disclosure is not limited thereto. Any variation or replacement readily figured out by a person skilled in the art within the technical scope of the present disclosure shall fall within the protection scope of the present disclosure. Therefore, the protection scope of the present disclosure shall be subject to the protection scope of the claims.

## Claims

1.  A method of power control, comprising:

    determining, by a terminal device, a second pathloss based on a first pathloss and a first pathloss offset, wherein the first pathloss is a pathloss between the terminal device and a first network device, and the second pathloss is a pathloss between the terminal device and a second network device; and
    determining, by the terminal device based on the second pathloss, transmit power of an uplink signal and/or an uplink channel sent by the terminal device to the second network device.

2.  The method according to claim 1, further comprising:
    sending, by the terminal device, an uplink reference signal to the first network device and the second network device; wherein the first pathloss offset is determined based on first received power and second received power, the first received power is received power corresponding to reception of the uplink reference signal by the first network device, and the second received power is received power corresponding to reception of the uplink reference signal by the second network device.

3.  The method according to claim 1, further comprising:
    sending, by the terminal device, a first uplink reference signal to the first network device and a second uplink reference signal to the second network device, wherein the first pathloss offset is determined based on first received power and second received power, wherein the first received power is received power corresponding to reception of the first uplink reference signal by the first network device, and the second received power is received power corresponding to reception of the second uplink reference signal by the second network device.

4. The method according to claim 3, wherein transmit power of the second uplink reference signal is the same as transmit power of the first uplink reference signal.

5. The method according to claim 1, further comprising:
sending, by the terminal device, a first uplink reference signal to the first network device and a second uplink reference signal to the second network device, wherein the first pathloss offset is determined based on first transmit power, second transmit power, first received power and second received power, wherein the first transmit power is transmit power of the first uplink reference signal, the second transmit power is transmit power of the second uplink reference signal, the first received power is received power corresponding to reception of the first uplink reference signal by the first network device, and the second received power is received power corresponding to reception of the second uplink reference signal by the second network device.

6. The method according to claim 5, wherein the transmit power of the second uplink reference signal is determined based on the transmit power of the first uplink reference signal and a first power offset.

7. The method according to claim 6, wherein the first power offset is predefined or network-configured.

8. The method according to any one of claims 1 to 7, further comprising:
receiving, by the terminal device, first signaling, wherein the first signaling is configured to configure N TCI states, each TCI state among the N TCI states is associated with one pathloss reference signal (PL RS) and one pathloss offset, and N is a positive integer.

9. The method according to claim 8, wherein the N TCI states comprise a first TCI state, and when the first TCI state is an indicated TCI state, a PL RS associated with the first TCI state is used for the terminal device to determine the first pathloss, and a pathloss offset associated with the first TCI state is used for the terminal device to determine the first pathloss offset.

10. The method according to any one of claims 1 to 7, further comprising:
receiving, by the terminal device, first signaling, wherein the first signaling is configured to configure N TCI states, each TCI state among the N TCI states is associated with one PL RS and a plurality of pathloss offsets, and N is a positive integer.

11. The method according to claim 10, further comprising:
receiving, by the terminal device, second signaling, wherein the second signaling is configured to activate M TCI states among the N TCI states and activate one pathloss offset for each activated TCI state, and M is a positive integer less than or equal to N.

12. The method according to claim 11, wherein the M TCI states comprise a first TCI state, and when the first TCI state is an indicated TCI state, a PL RS associated with the first TCI state is used for the terminal device to determine the first pathloss, and an activated pathloss offset associated with the first TCI state is used for the terminal device to determine the first pathloss offset.

13. The method according to any one of claims 1 to 7, further comprising:
receiving, by the terminal device, first signaling, wherein the first signaling is configured to configure N TCI states, each TCI state among the N TCI states is associated with a plurality of PL RSs and a plurality of pathloss offsets, and N is a positive integer.

14. The method according to claim 13, further comprising:
receiving, by the terminal device, second signaling, wherein the second signaling is configured to activate M TCI states among the N TCI states and activate one PL RS and one pathloss offset for each activated TCI state, and M is a positive integer less than or equal to N.

15. The method according to claim 14, wherein the M TCI states comprise a first TCI state, and when the first TCI state is an indicated TCI state, an activated PL RS associated with the first TCI state is used for the terminal device to determine the first pathloss, and an activated pathloss offset associated with the first TCI state is used for the terminal device to determine the first pathloss offset.

16. The method according to any one of claims 1 to 7, further comprising:

receiving, by the terminal device, first signaling, wherein the first signaling is configured to configure N TCI states, each TCI state among the N TCI states is associated with one PL RS, and N is a positive integer.

17. The method according to claim 16, wherein K TCI states among the N TCI states are indicated TCI states, and K is a positive integer less than N; the method further comprising:
receiving, by the terminal device, third signaling, wherein the third signaling is configured to indicate pathloss offsets associated with all of the K indicated TCI states or pathloss offsets associated with part of the K indicated TCI states.

18. ☐The method according to any one of claims 1 to 7, further comprising:
receiving, by the terminal device, first signaling, wherein the first signaling is configured to configure N TCI states, and N is a positive integer.

19. The method according to claim 18, wherein K TCI states among the N TCI states are indicated TCI states, and K is a positive integer less than N; the method further comprising:
receiving, by the terminal device, third signaling, wherein the third signaling is configured to indicate PL RSs and pathloss offsets associated with all of the K indicated TCI states or PL RSs and pathloss offsets associated with part of the K indicated TCI states.

20. The method according to claim 17 or 19, wherein a first indicated TCI state among the K indicated TCI states has a corresponding relationship with the second network device, a PL RS associated with the first indicated TCI state is used for the terminal device to determine the first pathloss, and a pathloss offset associated with the first indicated TCI state is used for the terminal device to determine the first pathloss offset.

21. The method according to any one of claims 1 to 7, further comprising:
receiving, by the terminal device, fourth signaling, wherein the fourth signaling is configured to determine the first pathloss offset.

22. A method of power control, comprising:

sending, by a first network device, signaling to a terminal device,
wherein the signaling is configured to determine a first pathloss offset; the first pathloss offset and a first pathloss are used for the terminal device to determine a second pathloss; the first pathloss is a pathloss between the terminal device and the first network device, and the second pathloss is a pathloss between the terminal device and a second network device; and the second pathloss is used for the terminal device to determine transmit power of an uplink signal and/or an uplink channel sent to the second network device.

23. The method according to claim 22, further comprising:
receiving, by the first network device, an uplink reference signal from the terminal device, wherein the first pathloss offset is determined based on first received power and second received power, the first received power is received power corresponding to reception of the uplink reference signal by the first network device, and the second received power is received power corresponding to reception of the uplink reference signal by the second network device.

24. The method according to claim 22, further comprising:

receiving, by the first network device, a first uplink reference signal from the terminal device,
wherein the first pathloss offset is determined based on first received power and second received power, the first received power is received power corresponding to reception of the first uplink reference signal by the first network device, and the second received power is received power corresponding to reception of a second uplink reference signal by the second network device.

25. The method according to claim 24, wherein transmit power of the second uplink reference signal is the same as transmit power of the first uplink reference signal.

26. The method according to claim 22, further comprising:

receiving, by the first network device, a first uplink reference signal from the terminal device,
wherein the first pathloss offset is determined based on first transmit power, second transmit power, first received power and second received power; the first transmit power is transmit power of the first uplink reference signal, the second transmit power is transmit power of a second uplink reference signal sent by the terminal device, the first received power is received power corresponding to reception of the first uplink reference signal by the first network device, and the second received power is received power corresponding to reception of the second uplink reference signal by the second network device.

27. The method according to claim 22, wherein the transmit power of the second uplink reference signal is determined based on the transmit power of the first uplink reference signal and a first power offset.

28. The method according to claim 27, wherein the first power offset is predefined or network-configured.

29. The method according to any one of claims 22 to 28, wherein the sending, by the first network device, signaling to the terminal device comprises:
sending, by the first network device, first signaling to the terminal device, wherein the first signaling is configured to configure N TCI states, each TCI state among the N TCI states is associated with one pathloss reference signal (PL RS) and one pathloss offset, and N is a positive integer.

30. The method according to claim 29, wherein the N TCI states comprise a first TCI state, and when the first TCI state is an indicated TCI state, a PL RS associated with the first TCI state is used for the terminal device to determine the first pathloss, and a pathloss offset associated with the first TCI state is used for the terminal device to determine the first pathloss offset.

31. The method according to any one of claims 22 to 28, wherein the sending, by the first network device, signaling to the terminal device comprises:

sending, by the first network device, first signaling and second signaling to the terminal device,
wherein the first signaling is configured to configure N TCI states, each TCI state among the N TCI states is associated with one PL RS and a plurality of pathloss offsets, and N is a positive integer; and the second signaling is configured to activate M TCI states among the N TCI states and activate one pathloss offset for each activated TCI state, and M is a positive integer less than or equal to N.

32. The method according to claim 31, wherein the M TCI states comprise a first TCI state, and when the first TCI state is an indicated TCI state, a PL RS associated with the first TCI state is used for the terminal device to determine the first pathloss, and an activated pathloss offset associated with the first TCI state is used for the terminal device to determine the first pathloss offset.

33. The method according to any one of claims 22 to 28, wherein the sending, by the first network device, signaling to the terminal device comprises:

sending, by the first network device, first signaling and second signaling to the terminal device,
wherein the first signaling is configured to configure N TCI states, each TCI state among the N TCI states is associated with a plurality of PL RSs and a plurality of pathloss offsets, and N is a positive integer; and the second signaling is configured to activate M TCI states among the N TCI states and activate one PL RS and one pathloss offset for each activated TCI state, and M is a positive integer less than or equal to N.

34. The method according to claim 33, wherein the M TCI states comprise a first TCI state, and when the first TCI state is an indicated TCI state, an activated PL RS associated with the first TCI state is used for the terminal device to determine the first pathloss, and an activated pathloss offset associated with the first TCI state is used for the terminal device to determine the first pathloss offset.

35. The method according to any one of claims 22 to 28, wherein the sending, by the first network device, signaling to the terminal device comprises:

sending, by the first network device, first signaling and third signaling to the terminal device,
wherein the first signaling is configured to configure N TCI states, each TCI state among the N TCI states is associated with one PL RS, and N is a positive integer; K TCI states among the N TCI states are indicated TCI states, and K is a positive integer less than N; and the third signaling is configured to indicate pathloss offsets associated with all of the K indicated TCI states or pathloss offsets associated with part of the K indicated TCI states.

36. The method according to any one of claims 22 to 28, wherein the sending, by the first network device, signaling to the terminal device comprises:

sending, by the first network device, first signaling and third signaling to the terminal device, wherein the first signaling is configured to configure N TCI states, and N is a positive integer; K TCI states among the N TCI states are indicated TCI states, and K is a positive integer less than N; and the third signaling is configured to indicate PL RSs and pathloss offsets associated with all of the K indicated TCI states or PL RSs and pathloss offsets associated with part of the K indicated TCI states.

37. The method according to claim 35 or 36, wherein a first indicated TCI state among the K indicated TCI states has a corresponding relationship with the second network device, a PL RS associated with the first indicated TCI state is used for the terminal device to determine the first pathloss, and a pathloss offset associated with the first indicated TCI state is used for the terminal device to determine the first pathloss offset.

38. The method according to any one of claims 22 to 28, wherein the sending, by the first network device, signaling to the terminal device comprises:
sending, by the first network device, fourth signaling to the terminal device, wherein the fourth signaling is configured to determine the first pathloss offset.

39. A power control apparatus, implemented by a terminal device, comprising:
a determining unit, configured to: determine a second pathloss based on a first pathloss and a first pathloss offset, wherein the first pathloss is a pathloss between the terminal device and a first network device, and the second pathloss is a pathloss between the terminal device and a second network device; and determine, based on the second pathloss, transmit power of an uplink signal and/or an uplink channel sent by the terminal device to the second network device.

40. A power control apparatus, implemented by a first network device, comprising:

a sending unit, configured to: send signaling to a terminal device, wherein the signaling is configured to determine a first pathloss offset; the first pathloss offset and a first pathloss are used for the terminal device to determine a second pathloss; the first pathloss is a pathloss between the terminal device and the first network device, and the second pathloss is a pathloss between the terminal device and a second network device; and the second pathloss is used for the terminal device to determine transmit power of an uplink signal and/or an uplink channel sent to the second network device.

41. A communication device, comprising: a processor and a memory, wherein the memory is configured to store a computer program, and the processor is configured to invoke and run the computer program stored in the memory to cause the communication device to perform the method according to any one of claims 1 to 38.

42. A chip, comprising: a processor, configured to invoke and run a computer program from a memory to cause a device equipped with the chip to perform the method according to any one of claims 1 to 38.

43. A computer-readable storage medium, configured to store a computer program that causes a computer to perform the method according to any one of claims 1 to 38.

44. A computer program product, comprising computer program instructions that cause a computer to perform the method according to any one of claims 1 to 38.

45. A computer program, causing a computer to perform the method according to any one of claims 1 to 38.

**FIG. 1**

| R | Serving cell ID | | | | | DL BWP ID | | Oct 1 |
|---|---|---|---|---|---|---|---|---|
| R | R | R | R | R | R | UL BWP ID | | Oct 2 |
| $P_1$ | $P_2$ | $P_3$ | $P_4$ | $P_5$ | $P_6$ | $P_7$ | $P_8$ | Oct 3 |
| D/U | TCI state ID1 | | | | | | | Oct 4 |
| D/U | TCI state ID 2 | | | | | | | Oct 5 |

...

| D/U | TCI state ID M | | | | | | | Oct N+3 |

**FIG. 2**

A terminal device determines a second pathloss based on a first pathloss and a first pathloss offset, the first pathloss being a pathloss between the terminal device and a first network device, and the second pathloss being a pathloss between the terminal device and a second network device | 301

The terminal device determines, based on the second pathloss, transmit power of an uplink signal and/or an uplink channel sent by the terminal device to a second network device | 302

**FIG. 3**

UL TRP

regular TRP

RL RS

UL transmission

UL transmission

terminal device

**FIG. 4**

**FIG. 5**

**FIG. 6**

| R | Serving cell ID | | | | | DL BWP ID | | Oct 1 |
|---|---|---|---|---|---|---|---|---|
| R | R | R | R | R | R | UL BWP ID | | Oct 2 |
| $P_1$ | $P_2$ | $P_3$ | $P_4$ | $P_5$ | $P_6$ | $P_7$ | $P_8$ | Oct 3 |
| D/U | TCI state ID 1 | | | | | | | Oct 4 |
| PL-Offset ID1 | | | | | | | | Oct 5 |
| D/U | TCI state ID 2 | | | | | | | |
| PL-Offset ID2 | | | | | | | | ... |

...

| D/U | TCI state ID M | | | | | | | |
|---|---|---|---|---|---|---|---|---|
| PL-Offset IDM | | | | | | | | Oct 2N+3 |

**FIG. 7**

| R | Serving cell ID | | | | | DL BWP ID | | Oct 1 |
|---|---|---|---|---|---|---|---|---|
| R | R | R | R | R | R | UL BWP ID | | Oct 2 |
| $P_1$ | $P_2$ | $P_3$ | $P_4$ | $P_5$ | $P_6$ | $P_7$ | $P_8$ | Oct 3 |
| D/U | TCI state ID 1 | | | | | | | Oct 4 |
| PL-RS ID1 | | | | | | | | Oct 5 |
| PL-Offset ID1 | | | | | | | | |
| D/U | TCI state ID 2 | | | | | | | |
| PL-RS ID2 | | | | | | | | |
| PL-Offset ID2 | | | | | | | | ... |

...

| D/U | TCI state ID M |
|---|---|
| PL-RS IDM | |
| PL-Offset IDM | Oct 3N+3 |

**FIG. 8**

| R | Serving cell ID | | | | | DL BWP ID | Oct 1 |
|---|---|---|---|---|---|---|---|
| R | R | R | R | R | R | UL BWP ID | Oct 2 |
| PL-Offset ID1 | | | | | | | Oct 3 |
| PL-Offset ID2 | | | | | | | ... |

...

| PL-Offset IDK | Oct N+2 |
|---|---|

**FIG. 9-1**

| R | Serving cell ID | | DL BWP ID | Oct 1 |
|---|---|---|---|---|
| R | R | k-th indicated TCI state | UL BWP ID | Oct 2 |
| PL-Offset IDk | | | | Oct 3 |

**FIG. 9-2**

| R | Serving cell ID | | | | | DL BWP ID | Oct 1 |
|---|---|---|---|---|---|---|---|
| R | R | R | R | R | R | UL BWP ID | Oct 2 |
| PL-RS ID1 | | | | | | | Oct 3 |
| PL-RS ID2 | | | | | | | |

...  ...

| PL-RS ID K |
|---|
| PL-Offset ID1 |
| PL-Offset ID2 |

...

| PL-Offset IDK | Oct 2N+2 |
|---|---|

**FIG. 10-1**

| R | Serving cell ID | | DL BWP ID | Oct 1 |
|---|---|---|---|---|
| R | R | k-th indicated TCI state | UL BWP ID | Oct 2 |
| PL-RS IDk | | | | Oct 3 |
| PL-Offset IDk | | | | Oct 4 |

**FIG. 10-2**

A terminal device receives RRC signaling sent by a regular TRP, where the RRC signaling is used to configure N TCI states, each TCI state among the N TCI states is associated with one PL RS and multiple pathloss offsets, and N is a positive integer ⌐ 1101

↓

The terminal device receives a MAC CE sent by the regular TRP, where the MAC CE is used to activate M TCI states among the N TCI states and activate one pathloss offset for each activated TCI state, and M is a positive integer less than or equal to N ⌐ 1102

↓

The terminal device receives DCI sent by the regular TRP, where the DCI is used to indicate one TCI state among the M TCI states, and the TCI state is an indicated TCI state ⌐ 1103

↓

The terminal device measures a PL RS associated with the indicated TCI state to obtain a first pathloss ⌐ 1104

↓

The terminal device superimposes an activated pathloss offset associated with the indicated TCI state onto the first pathloss to obtain a second pathloss ⌐ 1105

↓

The terminal device calculates transmit power of an uplink signal and/or an uplink channel sent by the terminal device to an uplink TRP based on the second pathloss in combination with an uplink power control formula ⌐ 1106

↓

The terminal device sends the uplink signal and/or the uplink channel to the uplink TRP by using the indicated TCI state according to the calculated transmit power ⌐ 1107

**FIG. 11**

A terminal device receives RRC signaling sent by a regular TRP, where the RRC signaling is used to configure N TCI states, each TCI state among the N TCI states is associated with multiple PL RSs and multiple pathloss offsets, and N is a positive integer — 1201

The terminal device receives a MAC CE sent by the regular TRP, where the MAC CE is used to activate M TCI states among the N TCI states and activate one PL RS and one pathloss offset for each activated TCI state, and M is a positive integer less than or equal to N — 1202

The terminal device receives DCI sent by the regular TRP, where the DCI is used to indicate one TCI state among the M TCI states, and the TCI state is an indicated TCI state — 1203

The terminal device measures an activated PL RS associated with the indicated TCI state to obtain a first pathloss — 1204

The terminal device superimposes an activated pathloss offset associated with the indicated TCI state onto the first pathloss to obtain a second pathloss — 1205

The terminal device calculates transmit power of an uplink signal and/or an uplink channel sent by the terminal device to an uplink TRP based on the second pathloss in combination with an uplink power control formula — 1206

The terminal device sends the uplink signal and/or the uplink channel to the uplink TRP by using the indicated TCI state according to the calculated transmit power — 1207

**FIG. 12**

A terminal device receives RRC signaling sent by a regular TRP, where the RRC signaling is used to configure N TCI states, each TCI state among the N TCI states is associated with one PL RS, and N is a positive integer  1301

The terminal device receives a MAC CE sent by the regular TRP, where the MAC CE is used to activate M TCI states among the N TCI states, and M is a positive integer less than or equal to N  1302

The terminal device receives DCI sent by the regular TRP, where the DCI is used to indicate one TCI state among the M TCI states, and the TCI state is an indicated TCI state  1303

The terminal device receives a MAC CE sent by the regular TRP, where the MAC CE is used to indicate a pathloss offset associated with the indicated TCI state  1304

The terminal device measures a PL RS associated with the indicated TCI state to obtain a first pathloss  1305

The terminal device superimposes the pathloss offset associated with the indicated TCI state onto the first pathloss to obtain a second pathloss  1306

The terminal device calculates, based on the second pathloss in combination with an uplink power control formula, transmit power of an uplink signal and/or an uplink channel sent by the terminal device to an uplink TRP  1307

The terminal device sends the uplink signal and/or the uplink channel to the uplink TRP by using the indicated TCI state according to the calculated transmit power  1308

**FIG. 13**

A terminal device receives RRC signaling sent by a regular TRP, where the RRC signaling is used to configure N TCI states, and N is a positive integer — 1401

The terminal device receives a MAC CE sent by the regular TRP, where the MAC CE is used to activate M TCI states among the N TCI states, and M is a positive integer less than or equal to N — 1402

The terminal device receives DCI sent by the regular TRP, where the DCI is used to indicate one TCI state among the M TCI states, and the TCI state is an indicated TCI state — 1403

The terminal device receives a MAC CE sent by the regular TRP, where the MAC CE is used to indicate one PL RS and one pathloss offset associated with the indicated TCI state — 1404

The terminal device measures the PL RS associated with the indicated TCI state to obtain a first pathloss — 1405

The terminal device superimposes the pathloss offset associated with the indicated TCI state onto the first pathloss to obtain a second pathloss — 1406

The terminal device calculates, based on the second pathloss in combination with an uplink power control formula, transmit power of an uplink signal and/or an uplink channel sent by the terminal device to an uplink TRP — 1407

The terminal device sends the uplink signal and/or the uplink channel to the uplink TRP by using the indicated TCI state according to the calculated transmit power — 1408

**FIG. 14**

Power control apparatus

sending unit 1502

receiving unit 1503

determining unit 1501

**FIG. 15**

Power control apparatus

sending unit 1601

receiving unit 1602

**FIG. 16**

communication device 1700

memory
1720

processor
1710

transceiver
1730

**FIG. 17**

chip 1800

input
interface
1830

processor
1810

memory
1820

output
interface
1840

**FIG. 18**

# EP 4 773 686 A1

## INTERNATIONAL SEARCH REPORT

| | International application No. |
|---|---|
| | **PCT/CN2023/136546** |

| A. | CLASSIFICATION OF SUBJECT MATTER |
|---|---|
| | H04W 52/14(2009.01)i |

According to International Patent Classification (IPC) or to both national classification and IPC

| B. | FIELDS SEARCHED |
|---|---|

Minimum documentation searched (classification system followed by classification symbols)

IPC: H04W, H04Q

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, OETXT, VEN, WPABS, WPABSC: 不存在, 参考信号功率, 控制, 基站, 接收, 功率, 路径损耗, 参考信号, 没有, 偏移, 偏置, 上行, 网络设备, 无, 下行, eNB, gNB, LTE, NR, offset, ONLY, pathloss, PL, PLRS, power control+, RS, SUL, TCI, TPC, TRP UL, uplink

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021142800 A1 (HUAWEI TECHNOLOGIES CO., LTD.) 22 July 2021 (2021-07-22) description, paragraphs [0059]-[0110] and [0168]-[0181], and figures 1-5 | 1-7, 21-28, 38-45 |
| Y | WO 2021142800 A1 (HUAWEI TECHNOLOGIES CO., LTD.) 22 July 2021 (2021-07-22) description, paragraphs [0059]-[0110] and [0168]-[0181], and figures 1-5 | 8-20, 29-37, 41-45 |
| Y | CN 116762448 A (SAMSUNG ELECTRONICS CO., LTD.) 15 September 2023 (2023-09-15) description, paragraphs [0141]-[0418], and figures 8-33 | 8-20, 29-37, 41-45 |
| A | CN 116113023 A (RESEARCH INSTITUTE OF CHINA MOBILE COMMUNICATIONS CO., LTD. et al.) 12 May 2023 (2023-05-12) entire document | 1-45 |
| A | US 2021211987 A1 (LENOVO (SINGAPORE) PTE. LTD.) 08 July 2021 (2021-07-08) entire document | 1-45 |
| A | SAMSUNG. "Connected Mode Aspects of Supplementary Uplink Frequency" *3GPP TSG-RAN WG2 #99bis, R2-1711808*, 13 October 2017 (2017-10-13), entire document | 1-45 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 August 2024** | **16 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/136546**

| Patent document cited in search report | | | Publication date (day/month/year) | Patent family member(s) | | | Publication date (day/month/year) |
|---|---|---|---|---|---|---|---|
| WO | 2021142800 | A1 | 22 July 2021 | CN | 114930915 | A | 19 August 2022 |
| | | | | EP | 4075876 | A1 | 19 October 2022 |
| | | | | US | 2022353767 | A1 | 03 November 2022 |
| CN | 116762448 | A | 15 September 2023 | US | 2022232573 | A1 | 21 July 2022 |
| | | | | KR | 20230132787 | A | 18 September 2023 |
| | | | | EP | 4260632 | A1 | 18 October 2023 |
| | | | | WO | 2022154460 | A1 | 21 July 2022 |
| CN | 116113023 | A | 12 May 2023 | None | | | |
| US | 2021211987 | A1 | 08 July 2021 | None | | | |

Form PCT/ISA/210 (patent family annex) (July 2022)